# EUROPEAN PATENT SPECIFICATION

(11) **EP 4 250 439 B1**
(45) Date of publication and mention of the grant of the patent: **06.05.2026**
(21) Application number: 23161887.7
(22) Date of filing: 14.03.2023
(51) Int. Cl.: H01M 50/103, H01M 50/15, H01M 50/176, H01M 50/54, H01M 50/531

(54) **BATTERY**
BATTERIE
BATTERIE

(30) Priority: 26.03.2022 CN 202210304868
(43) Date of publication of application: 27.09.2023
(73) Proprietor: Zhuhai CosMX Battery Co., Ltd., Zhuhai, Guangdong 519180 (CN)
(72) Inventor: WEI, Zhida, Zhuhai, Guangdong (CN); LI, Xilong, Zhuhai, Guangdong (CN); WANG, Zhifeng, Zhuhai, Guangdong (CN); PENG, Ning, Zhuhai, Guangdong (CN)
(74) Representative: Bandpay & Greuter

(56) References cited:
- EP-A1- 2 575 189
- EP-A1- 2 793 294
- CN-A- 113 381 104
- US-A1- 2019 319 295

## Description

### TECHNICAL FIELD

The present invention relates to the field of electrochemical energy storage devices, in particular, to batteries.

### BACKGROUND

At present, electrochemical devices represented by batteries are widely used. For example, lithium-ion batteries have the advantages of large capacity, small size, light weight and environmental friendliness, and have been widely applied to digital electronic products and electric vehicles and other industries.

With the development of science and technology, the requirements for battery performance such as energy density are getting higher and higher, therefore, it is urgent to improve the energy density of battery.

EP2793294A1 describes a rechargeable battery (100) including an electrode assembly (10) that is adapted to perform a charge and discharge operation; a case (15) that houses the electrode assembly (10); a cap plate (20) coupled to and closing an opening of the case (15); an electrode terminal (21, 22); and a lead tab (51) that connects the electrode assembly (10) to the electrode terminal (21, 22), wherein the lead tab (51) includes a current collecting connection portion (511) that is connected to the electrode assembly (10); a terminal connection portion (512) that is bent from the current collecting connection portion (511) to be connected to the electrode terminal (10); and a synthetic material (514) that embeds the terminal connection portion (512) in which a fuse (513) is formed.

CN113381104A describes a cover plate assembly for the battery including a top cover; a conductive structure arranged on the top cover, the conductive structures including at least one pole for conducting electricity; at least one connection structure, a first end of each connection structure being electrically connected to a corresponding pole, a second end of the each connection structure being electrically connected to a tab of a cell, and the second end of the each connection structure being provided with an installation hole; and a locking structure including at least one locking member.

US2019/319295A1 describes a rechargeable battery, including: an electrode assembly formed by disposing an electrode having coated regions and uncoated tabs at opposite sides of a separator; a case configured to accommodate the electrode assembly therein; a cap plate coupled to an opening of the case; and electrode terminals insert-molded into terminal holes of the cap plate to be connected to the uncoated tabs, wherein the electrode terminal includes: an external terminal portion configured to protrude outside of the cap plate; an internal terminal portion disposed within the cap plate to be connected to the uncoated tabs; and a connector configured to connect the external terminal portion and the external portion, and disposed in the terminal hole to be insulated by a molding resin material.

EP2575189A1 discloses a rechargeable battery comprising: a housing, an electrode assembly including a first electrode and a second electrode and situated within the housing; a first electrode terminal; and a first current collecting member; wherein the first current collecting member comprises a terminal connection portion that is electrically connected to the first electrode terminal and a current collecting piece that is electrically connected to the first electrode.

### SUMMARY

The present invention is set out in the appended set of claims. The present invention provides a battery, which may improve the energy density of the battery.

The present invention provides a battery including: a housing enclosed to form a chamber, the housing including a first side plate; a cell located in the chamber and provided with a first tab; and a first adapter electrically connected with the first tab, wherein the first adapter is disposed between the first side plate and the cell, and a projection of the first adapter on the first side plate does not overlap with a projection of the first tab on the first side plate.

According to an implementation of the present invention, the housing includes a second side plate connected with the first side plate, and a projection of the first adapter on the second side plate at least partially overlaps with a projection of the first tab on the second side plate.

According to an implementation of the present invention, an end surface of a side of the cell provided with the first tab is parallel with a width direction of the cell; and/or, a distance from a side of the first tab facing away from the cell to a side of the first tab connected with the cell is not more than a length of the first adapter along a direction from the first side plate to the first tab; and/or, along the direction from the first side plate to the first tab, a length of the first adapter is 1 mm-3 mm.

According to an implementation of the present invention, the battery further includes an external connector disposed on a side of the first side plate facing away from the chamber, the external connector includes an outward-protruding post, and the first adapter includes a first through hole corresponding to the post, and the post penetrates through the first side plate and is connected with the first adapter through the first through hole.

According to an implementation of the present invention, the first through hole of the first adapter includes a first hole section and a second hole section which are connected with each other, and the second hole section is located on a side of the first hole section close to the cell; and an end of the post close to the cell extends outward to form an extension part corresponding to the second hole section.

According to an implementation of the present invention, an end surface of the post close to the cell is flush with a side surface of the first adapter close to the cell.

According to an implementation of the present invention, the end of the post close to the cell protrudes out of the first through hole and extends outward along a circumferential direction of the first through hole to form an extension part connected with the side surface of the first adapter close to the cell.

According to an implementation of the present invention, a first insulation sheet is also disposed between the external connector and the first side plate, and a second insulation sheet is also disposed between the first adapter and the first side plate, and the post penetrates through the first insulation sheet and the second insulation sheet; and/or, a first insulation layer is disposed between the post and the first side plate; and/or, a second insulation layer is disposed between the first adapter and the cell.

According to an implementation of the present invention, a projection of the first insulation sheet on the first side plate covers a projection of the external connector on the first side plate; and/or, a projection of the second insulation sheet on the first side plate covers a projection of the first adapter on the first side plate.

According to an implementation of the present invention, the battery includes a plurality of electrode sheets arranged in a laminated manner, the cell has a first face and a second face that are disposed opposite to each other, where, the second insulation layer extends to the first face of the cell and is bonded to the electrode sheet located on the first face of the cell, and/or, the second insulation layer extends to the second face of the cell and is bonded to the electrode sheet located on the second face of the cell.

According to an implementation of the present invention, the battery further includes a first connector located between the cell and the first side plate and connected with the fist tab and the first adapter, respectively.

According to an implementation of the present invention, the first connector includes a first connection sheet connected with the first adapter and a fourth connection sheet connected with a side of the first tab facing away from the cell.

According to an implementation of the present invention, the first connector further includes a connection component connected with the first connection sheet and the fourth connection sheet, respectively; the connection component includes a second connection sheet and a third connection sheet; the second connection sheet is located between the first adapter and the cell; the third connection sheet is located between the first tab and the first adapter in a direction from the first adapter to the first tab; and the first connection sheet, the second connection sheet, the third connection sheet and the fourth connection sheet are sequentially connected.

According to an implementation of the present invention, the first connection sheet includes a first connection part connected with the first adapter and a second connection part extending in an extension direction of the first side plate, and the second connection part is connected with the fourth connection sheet.

According to an implementation of the present invention, a side of the first connection sheet facing away from the first adapter is further provided with a sixth insulation layer; and/or, a first included angle is formed between a surface of the first adapter connected with the first connection sheet and a surface of the fourth connection sheet connected with the first tab, and the first angle is in a range of 80°-120°; and/or, the first connection sheet is welded with the first adapter; and/or, the cell includes a plurality of electrode sheets arranged in a laminated manner, and a surface of the first connection sheet connected with the first adapter is parallel with a surface of the electrode sheet.

According to an implementation of the present invention, the battery further includes a third insulation layer located between the first connector and the first side plate.

According to an implementation of the present invention, the third insulation layer includes a first portion located on a surface of the fourth connection sheet facing away from the first tab.

According to an implementation of the present invention, the cell includes a plurality of electrode sheets arranged in a laminated manner; the cell has a first face and a second face that are disposed opposite to each other; the third insulation layer further includes a second portion extending from an end of the first portion close to the first face of the cell to a direction close to the cell, and a third portion extending from an end of the first portion close to the second face of the cell to the direction close to the cell.

According to an implementation of the present invention, a projection of the first tab in a thickness direction of the cell is located within a projection of the second portion of the third insulation layer in the thickness direction of the cell; and/or,
the projection of the first tab in the thickness direction of the cell is located within a projection of the third portion of the third insulation layer in the thickness direction of the cell; and/or, a projection of the first tab in a length direction of the cell is located within a projection of the first portion of the third insulation layer in the length direction of the cell.

According to an implementation of the present invention, the second portion of the third insulation layer extends to the first face of the cell and is bonded to the electrode plate located on the first face of the cell; and/or, the third portion of the third insulation layer extends to the second face of the cell and is bonded to the electrode plate located on the second face of the cell.

According to an implementation of the present invention, the cell includes a plurality of electrode sheets arranged in a laminated manner, the electrode plate includes a first current collector, and the first tab is disposed on the first current collector; and, a distance between the first adapter and the first current collector is less than 1 mm in a direction from the first adapter to the cell.

According to an implementation of the present invention, the cell is further provided with a second tab, and the second tab and the first tab have opposite polarities; and the battery further includes a second adapter electrically connected with the second tab, and the second adapter is disposed between the first side plate and the cell, and a projection of the second adapter on the first side plate does not overlap with a projection of the second tab on the first side plate.

According to an implementation of the present invention, the housing includes a second side plate connected with the first side plate, and a projection of the first tab on the second side plate at least partially overlaps with a projection of the second tab on the second side plate; and/or, a projection of the second adapter on the second side plate at least partially overlaps with the projection of the second tab on the second side plate.

According to an implementation of the present invention, the first tab and the second tab are located between the first adapter and the second adapter; and/or, the second adapter is welded with the first side plate; and/or, a distance between a side of the second tab facing away from the cell and a side of the second tab connected with the cell is not greater than a length of the second adapter in a direction from the first side plate to the second tab; and/or, in the direction from the first side plate to the second tab, the length of the second adapter is 1 mm-4 mm; and/or, in the direction from the first side plate to the second tab, the length of the second adapter is equal to or greater than a length of the first adapter.

According to an implementation of the present invention, the housing includes a fifth side plate connected with the first side plate, and the fifth side plate is provided with a thinning part, and a mechanical strength of the thinning part is less than a mechanical strength of other portions of the housing except for the thinning part.

According to an implementation of the present invention, the cell includes a plurality of electrode sheets arranged in a laminated manner, and a surface of the fifth side plate is parallel with a surface of the electrode sheet.

According to an implementation of the present invention, the first tab is a positive tab or a negative tab; and/or, the cell includes a laminated cell or a winding cell.

In the present invention, the projections of the first tab and of the first adapter electrically connected to the first tab on the first side plate do not overlap, and the two are distributed in a direction perpendicular to a direction from the first side plate to the cell, which can save the space between the first side plate and the cell, fully utilize the space of the chamber enclosed by the housing, increase a volume of the cell, and improve the battery performances such as energy density.

### BRIEF DESCRIPTION OF DRAWINGS

FIG. 1 is a structural schematic diagram of a connection between a first adapter and a housing of an embodiment of the present invention.
FIG. 2 is a structural schematic diagram of a connection between a first adapter and a housing of an embodiment of the present invention.
FIG. 3 is a structural schematic diagram of a connection between a first adapter and a housing of an embodiment of the present invention.
FIG. 4 is a structural schematic diagram of an external connector and a post of an embodiment of the present invention.
FIG. 5 is a structural schematic diagram of a connection between a first adapter and a housing of an embodiment of the present invention.
FIG. 6 is a structural schematic diagram of a connection between a first adapter and a housing of an embodiment of the present invention.
FIG. 7 is a structural schematic diagram of a second insulation sheet of an embodiment of the present invention.
FIG. 8 is a structural schematic diagram of a connection between a tab of cell and an adapter of an embodiment of the present invention.
FIG. 9 is a structural schematic diagram showing a connection between a first tab and a first adapter of an embodiment of the present invention.
FIG. 10 is a structural schematic diagram showing a connection between a first tab, a first adapter and a third insulation layer of an embodiment of the present invention.
FIG. 11 is a structural schematic diagram of cell packaging of an embodiment of the present invention.
FIG. 12 is a structural schematic diagram of cell packaging of an embodiment of the present invention.
FIG. 13 is a structural schematic diagram of a battery of an embodiment of the present invention.

Reference numerals: 1: housing; 11: first side plate; 12: second side plate; 13: third side plate; 14: fourth side plate; 15: fifth side plate; 16: sixth side plate; 17: arc transition part; 100: liquid injection hole; 110: second through hole; 151: thinning part; 2: cell; 21: first tab; 22: second tab; 31: first adapter; 310: first through hole; 32: second adapter; 41: external connector; 42: post; 43: extension part; 51: first connection sheet; 511: first connection part; 512: second connection part; 52: second connection sheet; 53: third connection sheet; 54: fourth connection sheet; 55: fifth connection sheet; 551: third connection part; 552: fourth connection part; 56: sixth connection sheet; 57: seventh connection sheet; 58: eighth connection sheet; 6: first insulation sheet; 60: third through hole; 7: second insulation sheet; 70: fourth through hole; 71: first insulation part; 72: second insulation part; 81: first insulation layer; 82: second insulation layer; 83: third insulation layer; 84: fourth insulation layer; 85: fifth insulation layer; 86: sixth insulation layer; 9: protective adhesive layer; 90: fifth through hole.

### DESCRIPTION OF EMBODIMENTS

In order to make those skilled in the art better understand the solution of the present invention, the present invention will be further described in detail below. The following specific implementations are merely description of the principles and features of the present invention, and the examples are only intended to explain the present invention, rather than to limit the scope of the present invention. Based on the embodiments of the present invention, all other implementations obtained by those ordinary skilled in the art without creative effort fall within the protection scope of the present invention.

In the description of the present invention, the terms "disposing" "installing", "connecting", "connected", "connection" and the like shall be broadly understood unless otherwise clearly specified and defined. For example, it may be a fixed connection, a detachable connection, or an integral connection; it may be a mechanical connection, an electrical connection, or a communication connection (network connection); it may be a direct connection, an indirect connection through an intermediate medium, or an internal communication between two elements. For those ordinary skilled in the art, the specific meaning of the above terms in the present invention may be understood according to specific cases. In addition, the terms "first", "second", "third", "fourth", "fifth", "sixth", "seventh", "eighth" and the like are only used for descriptive purposes, for example, distinguishing the respective parts to more clearly illustrate/explain the technical solution, and are not to be understood as a meaning of indicating or implying the number or the order of the indicated technical features, etc. In addition, the terms "parallel", "vertical", "equal" and the like are all in an approximate state, and the involved values and value ranges are approximate values; due to the influence of specific operation processes such as measurement and manufacturing process, there may be a certain range of errors, which may be considered negligible by those skilled in the art.

A battery is a commonly used electrochemical energy storage device, and generally includes a housing, a cell encapsulated in a chamber that is formed by the housing and the like. The cell is provided with a tab (such as a first tab described below), it is necessary to lead out the electricity of the tab located in the chamber through an adapter electrically connected with the tab to form an electrode of the battery. However, a connection structure between a conventional adapter and the tab occupies a relative large chamber space, for example, the more common connection structure is to arrange the adapter between the housing and the tab, which results in a lower energy density of the cell.

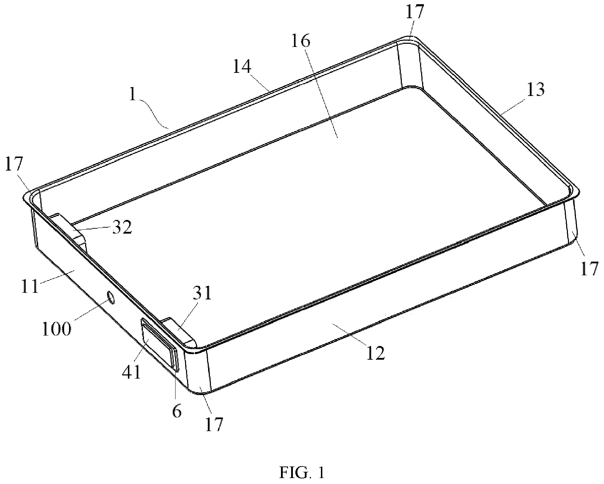

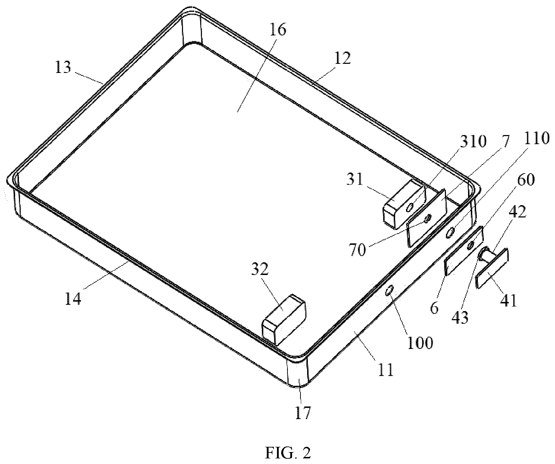

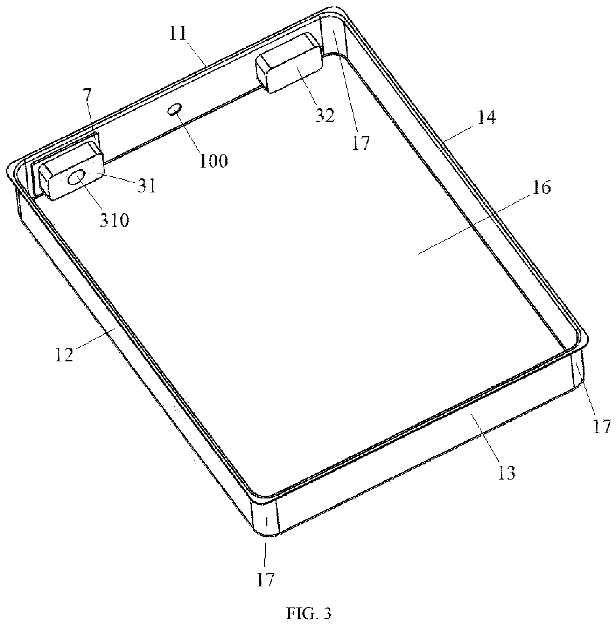

In view of the above problems, the embodiments of the present invention provide a battery, as shown in FIG. 1 to FIG. 13, the battery includes a housing 1 enclosed to form a chamber; the housing 1 includes a first side plate 11; a cell 2 located in the chamber and provided with a first tab 21; a first adapter 31 electrically connected with the first tab 21; a first adapter 31 disposed between the first side plate 11 and the cell 2. A projection of the first adapter 31 on the first side plate 11 does not overlap with a projection of the first tab 21 on the first side plate 11 (that is, a projection of the first adapter 31 parallel with an extension direction of the first side plate 11 does not overlap with a projection of the first tab 21 parallel with the extension direction of the first side plate 11).

Thus, the first tab 21 and the first adapter 31 are not distributed in a direction from the cell 2 to the first side plate 11. Specifically, in the direction from the first side plate 11 to the cell 2, a distance from the first side plate 11 to the cell 2 is a₁, and a distance from a side of the first tab 21 connected with the cell 2 to a side of the first tab 21 facing away from the cell 2 (that is, a side of the first tab 21 facing the first side plate 11) is bi, a distance from a side of the first adapter 31 facing the cell 2 (that is, a side of the first adapter 31 facing away from the first side plate 11) to a side of the first adapter 31 facing the first side plate 11 (that is, a length of the first adapter 31 in the direction from the first side plate 11 to the cell 2) is c₁, a₁<b₁+c₁. Thus, compared with the prior art of arranging the tab and the adapter in a length direction of the housing, the technical solution of the embodiment may make full use of the space between the cell and the first side plate, and may save the space of the chamber, thereby increasing a size of the cell and improving the battery performance such as energy density.

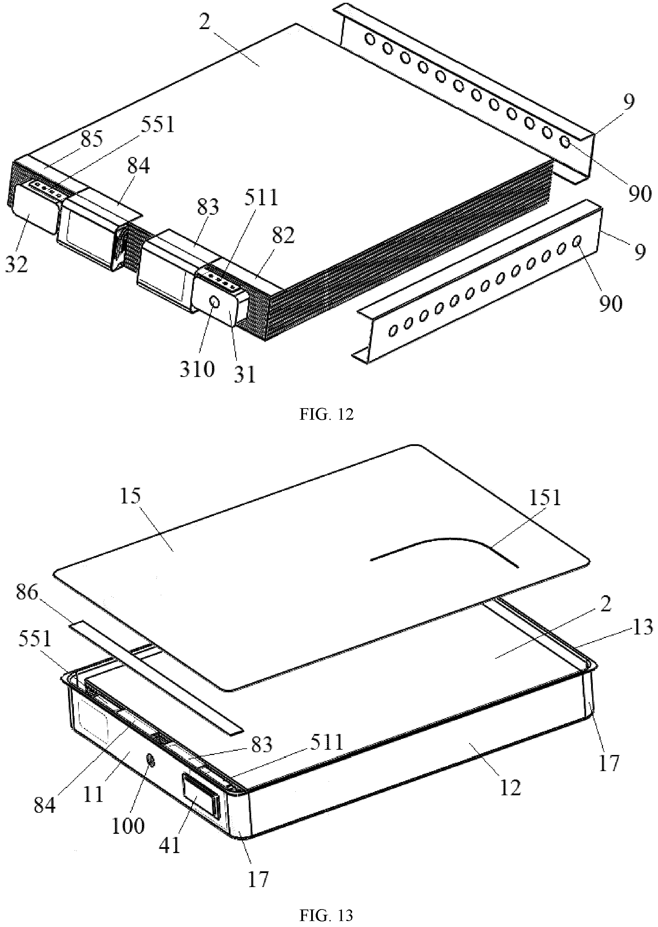

In the this embodiment, the extension direction of the first side plate 11 is parallel with a surface of the first side plate 11, and the direction from the first side plate 11 to the cell 2 may be parallel with the length direction of the housing 1, the extension direction of the first side plate 11 may be a width direction of the housing 1 or a thickness direction of the housing 1. Exemplarily, as shown in FIG. 13, the extension direction of the first side plate 11 is the width direction of the housing 1.

In general, the length direction of the housing 1 is also a length direction of the cell 2, the width direction of the housing 1 is also a width direction of the cell 2, and the thickness direction of the housing 1 is also a thickness direction of the cell 2. In addition, the cell 2 may include a plurality of electrode sheets arranged in a laminated manner, and the electrode sheets are arranged in a laminated manner in the thickness direction of the cell 2, that is, the thickness direction of the cell 2 is also a thickness direction of the electrode sheets.

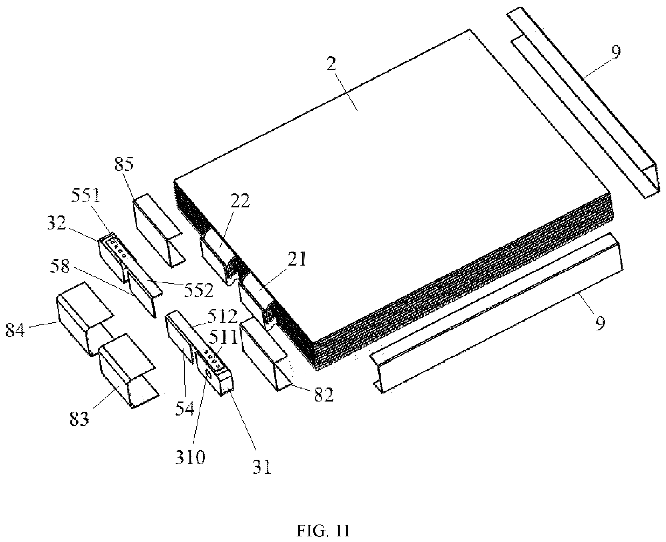

As shown in FIG. 11 to FIG. 13, the housing 1 includes a second side plate 12 connected with the first side plate 11, and a projection of the first adapter 31 on the second side plate 12 at least partially overlaps with a projection of the first tab 21 on the second side plate 12 (that is, the projection of the first adapter 31 perpendicular to the extension direction of the first side plate 11 at least partially overlaps with the projection of the first tab 21 perpendicular to the extension direction of the first side plate 11). That is, the first adapter 31 and the first tab 21 are distributed along the extension direction of the first side plate 11, thereby facilitating the connection between the first adapter 31 and the first tab 21, further saving chamber space and improving the battery performance such as energy density.

Specifically, a surface of the second side plate 12 may be perpendicular to a surface of the first side plate 11, and the cell 2 may include a plurality of electrode sheets arranged in a laminated manner, and the surface of the second side plate 12 is perpendicular to surfaces of the electrode sheets (that is, parallel with the thickness direction of the electrode sheets), and the surface of the first side plate 11 is perpendicular to the surfaces of the electrode sheets.

In some specific embodiments, as shown in FIG. 11 to FIG. 13, a projection of the first adapter 31 perpendicular to the width direction of the cell 2 at least partially overlaps with a projection of the first tab 21 perpendicular to the width direction of the cell 2, that is, the first adapter 31 and the first tab 21 are distributed along the width direction of the cell 2.

In some embodiments, a distance from a side of the first tab 21 facing away from the cell to a side of the first tab 21 connected with the cell 2 is not greater than a length of the first adapter 31 along the direction from the first side plate 11 to the first tab 21, that is, an overlapping area between the projection of the first adapter 31 on the second side plate 12 and the projection of the first tab 21 on the second side plate 12 is increased, thereby protecting the first tab 21 in the width direction of the cell, preventing the first tab 21 from falling off during the fall or collision of the battery, and at the same time, an area of the electrode sheet of the cell may be further expanded, which is beneficial to further improve the battery performances such as the energy density.

In some embodiments, a length c₁ of the first adapter 31 in the direction from the first side plate 11 to the first tab 21 is 1 mm-3 mm, for example, 1 mm, 1.5 mm, 2 mm, 2.5 mm, 3 mm, etc.

Specifically, the first adapter 31 may be in a block shape (or referred to as a first adapter block), the thickness direction thereof may be parallel with the direction from the first side plate 11 to the first tab 21, that is, the length of the first adapter 31 in the direction from the first side plate 11 to the first tab 21 is the thickness of the first adapter 31.

As shown in FIG. 1, FIG. 2, FIG. 4 and FIG. 5, the battery also includes an external connector 41 disposed on a side of the first side plate 11 of the housing 1 facing away from the chamber, and the external connector 41 includes an outward-protruding post 42. The post 42 penetrates through the first side plate 11 and is connected with the second adapter. Where, the post 42 is generally formed by protruding outward in a thickness direction of the external connector 41, that is, an axial direction of the post 42 is parallel with the thickness direction of the external connector 41.

Specifically, the first side plate 11 is provided with a second through hole 110 corresponding to the post 42, the post 42 passes through the second through hole 110 to realize the connection with the first adapter 31 by penetrating through the first side plate 11.

In addition, the first adapter 31 includes a first through hole 310 corresponding to the post 42, the post 42 penetrates through the first side plate 11 and is connected with the first adapter 31 through the first through hole 310, and the second through hole 110 may be coaxially arranged with the first through hole 310.

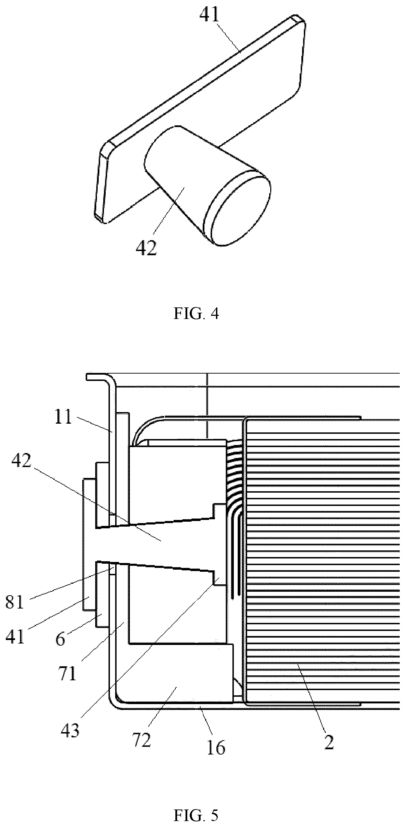

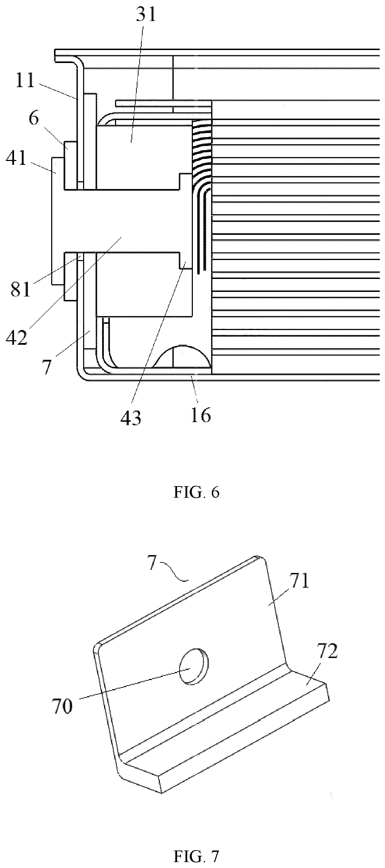

In general, a cross-section of the post 42 perpendicular to the axial direction of the post 42 is circular. As shown in FIG. 6, the post 2 may be cylindrical; or, as shown in FIG. 4 and FIG. 5, the post is in a tapered structure, that is, in a direction away from the external connector 41 (or the direction from the external connector 41 to the first side plate 11/the first adapter 31), a diameter of the post 42 is in an increasing tendency or a decreasing tendency, and the diameter of the post 42 is the diameter of the cross-section of the post 42 perpendicular to the axial direction of the post 42.

Specifically, when the post 42 is in a tapered structure, the diameter of the post 42 is in a changing tendency (that is, an increasing tendency or a decreasing tendency) in a direction from the first side plate 11 to the first adapter 31, and such change may be gradual, that is, it increases or decreases uniformly at substantially the same amplitude. The apertures (diameters) of the second through hole 110 and the first through hole 310 vary with the diameter of the post 42. For example, the diameter of the post 42 increases gradually in the direction from the first side plate 11 to the first adapter 31, and the apertures of the second through hole 110 and the first through hole 310 also gradually increase; in the direction from the first side plate 11 to the first adapter 31, as the diameter of the post 42 gradually decreases, the apertures of the second through hole 110 and the first through hole 310 also gradually decrease.

In some embodiments, as shown in FIG. 5 and FIG. 6, the first through hole 310 of the first adapter 31 includes a first hole section and a second hole section that are connected with each other, and the second hole section is located on a side of the first hole section close to the cell 2; an end of the post 42 close to the cell 2 extends outward to form an extension part 43 corresponding to the second hole section.

Specifically, the first hole section and the second hole section may be disposed coaxially, both the first hole section and the second hole section are circular through holes, and a diameter of the second hole section is greater than a diameter of an end of the first hole section connected with the second hole section. Preferably, the diameter of the second hole section is greater than the diameter of the first hole section, and a projection of the second hole section in a direction perpendicular to an axial direction of the first through hole 310 may cover a projection of the first hole section in a direction perpendicular to the axial direction of the first through hole 310.

In addition, an area of a cross-section of the external connector 41 perpendicular to the axial direction of the post 42 may be greater than an area of a cross-section of the post 42 perpendicular to the axial direction of the post 42; and a projection of the external connector 41 in the direction of perpendicular to the axial direction of the post 42 covers a projection of the post 42 in the direction of perpendicular to the axial direction of the post 42. An area of a cross-section of the extension part 43 perpendicular to the axial direction of the post 42 is greater than that of the post 42 perpendicular to the axial direction of the post 42; and the projection of the extension part 43 in the direction of perpendicular to the axial direction of the post 42 covers the projection of the post 42 in the direction of perpendicular to the axial direction of the post 42. The area of the cross-section of the external connector 41 perpendicular to the axial direction of the post 42 is greater than that of the extension part 43 in the direction perpendicular to the axial direction of the post 42; and the projection of the external connector 41 in the direction perpendicular to the axial direction of the post 42 covers the projection of the extension part 43 in the direction perpendicular to the axial direction of the post 42. The area of the cross-section of the extension part 43 perpendicular to the axial direction of the post 42 is substantially equal to that of the second hole section in a direction of perpendicular to the axial direction of the post 42; and the extension part 43 is clamped in the second hole section and is connected with a side wall of the second hole section.

As shown in FIG. 5 and FIG. 6, an end surface of the post 42 close to the cell 2 may be flush with a side surface of the first adapter 31 close to the cell 2, which not only ensures the bonding strength between the post 42 and the first adapter 31, but also prevents the post 42 from interfering with the connection of the first tab 21 or the first connection sheet 51 with the first adapter 31. Specifically, a thickness of the extension part 43 in the axial direction of the first through hole 310 (which is also the axial direction of the post 42) is substantially equal to a depth of the second hole section in the axial direction of the first through hole 310, so that the extension part 43 is clamped in the second hole section, and an end surface of the extension part 43 close to the cell 2 is flush with the side surface of the first adapter 31 facing the cell 2.

In addition, an end of the post 42 close to the cell 2 may also protrude from the first through hole 310 and extend outward along a circumferential direction of the first through hole 310 to form an extension part 43 in connection with the side surface of the first adapter 31 close to the cell 2. That is, the end surface of the post 42 close to the cell 2 is not flush with the side surface of the first adapter 31 facing the cell 2, but located between the first adapter 31 and the cell 2.

Where, the external connector 41, the post 42 and the extension part 43 may be integrally formed, and may be made of metal material. In a specific implementation, the first adapter 31 and the first side plate 11 may be riveted by a rivet; after riveting, one end of the rivet located at a side of the first side plate 11 away from the chamber forms the external connector 41, the other end of the rivet forms the extension part 43, and the part between the two ends forms the post 42, which is, for example, in a tapered structure.

In an embodiment, the first tab 21 may be electrically connected with the housing 1, and at this point, the external connector 41, the post 42 and the first adapter 31 may be in direct contact with the housing 1.

In another specific embodiment, the first tab 21 is insulated from the housing 1, in particular, it is possible to place an insulation sheet (an insulation layer) for insulation.

In some embodiments, as shown in FIG. 1 to FIG. 3, FIG. 5, FIG. 6 and FIG. 13, a first insulation sheet 6 is also disposed between the external connector 41 and the first side plate 11, and a second insulation sheet 7 is also disposed between the first adapter 31 and the first side plate 11. That is, the external connector 41, the first insulation sheet 6, the first side plate 11, the second insulation sheet 7 and the first adapter 31 are sequentially laminated, and the post 42 penetrates through the first insulation sheet 6 and the second insulation sheet 7; a first insulation layer 81 is disposed between the post 42 and the first side plate 11, so that the external connector 41, the post 42 and the first adapter 31 are electrically connected with the first tab 21, and in insulated connection with the first side plate 11 (the housing 1).

Where, along the circumferential direction of the first through hole 310, the difference between the aperture of the first through hole 310 and the diameter of the post 42 is substantially equal to a width of the first insulation layer 81 along the circumferential direction of the first through hole 310, and the circumferential direction of the first through hole 310 is perpendicular to the axial direction of the first through hole 310. Specifically, the first insulation layer 81 and the first insulation sheet 6 may be integrally formed, and a side of the first insulation sheet 6 close to the first side plate 11 bulges outward (bulging into the second through hole 110) to form the first insulation layer 81; or, the first insulation layer 81 and the second insulation sheet 7 may be integrally formed, and a side of the second insulation sheet 7 close to the first side plate 11 bulges outward (bulging into the second through hole 110) to form the first insulation layer 81.

Accordingly, the first insulation sheet 6 is provided with a third through hole 60, and the post 42 passes through the third through hole 60 to realize penetration of the first insulation sheet 6; the second insulation sheet 7 is provided with a fourth through hole 70, and the post 42 passes through the fourth through hole 70 to realize penetration of the second insulation sheet 7. Specifically, the post 42 sequentially passes through the third through hole 60, the second through hole 110, the fourth through hole 70 and the first through hole 310 to realize its connection with the first adapter 31. Where, the third through hole 60, the second through hole 110, the fourth through hole 70 and the first through hole 310 may be arranged coaxially.

As shown in FIG. 1 to FIG. 3, FIG. 5, FIG. 6 and FIG. 13, a projection of the first insulation sheet 6 on the first side plate 11 may cover the projection of the external connector 41 on the first side plate 11 (that is, the projection of the external connector 41 on the first side plate 11 is located within the projection of the first insulation sheet 6 on the first side plate 11), thereby preventing the external insulation sheet 41 from contacting with the housing 1 and ensuring the insulation of the housing. In addition, a projection of the second insulation sheet 7 on the first side plate 11 may cover the projection of the first adapter 31 on the first side plate 11 (that is, the projection of the first adapter 31 on the first side plate 11 is located within the projection of the second insulation sheet 7 on the first side plate 11), thereby preventing the first adapter 31 from contacting with the housing 1 and ensuring the insulation of the housing. As a result, the safety and stability of the battery can be further improved.

As shown in FIG. 5 and FIG. 7, the housing 1 also includes a sixth side plate 16 connected with the first side plate 11, and the second insulation sheet 7 may be in an L-shaped structure, and includes a first insulation part 71 and a second insulation part 72 which are connected with each other. The first insulation part 71 is located between the first adapter 31 and the first side plate 11, and the post 42 penetrates through the first insulation part 71, that is, the first insulation part 71 is provided with the fourth through hole 70 corresponding to the post 42, and the second insulation part 72 is located between the first adapter 31 and the sixth side plate 16. Thus, the second insulation part 72 may provide a bearing and supporting function for the first adapter 31, and may insulate the first transfer part 31 from the sixth side plate 16 of the housing 1 to improve the safety and stability of the battery, etc.

Where, a projection of the first insulating part 71 on the first side plate 11 may cover the projection of the first adapter 31 on the first side plate 11 (that is, the projection of the first adapter 31 on the first side plate 11 is located within the projection of the first insulation part 71 on the first side plate 11). A projection of the second insulating part 72 on the sixth side plate 16 may cover a projection of the first adapter 31 on the sixth side plate 16 (that is, the projection of the first adapter 31 on the sixth side plate 16 is within the projection of the second insulation part 72 on the sixth side plate 16) to prevent the first adapter 31 from contacting with the first side plate 11 or the sixth side plate 16.

Where, a surface of the sixth side plate 16 is parallel with a surface of the electrode sheet; the sixth side plate 16 is not parallel with the surface of the first side plate 11, for example, the sixth side plate 16 is perpendicular to the surface of the first side plate 11; the sixth side plate 16 is not parallel with a surface of the second side plate 12, for example, the sixth side plate 16 is perpendicular to the surface of the first side plate 11; the sixth side plate 16 may, for example, be a bottom side plate (or a bottom plate).

In addition, an included angle is formed between a surface of the first insulation part 71 connected with the first adapter 31 and a surface of the second insulation part 72 connected with the first adapter 31, and the included angle may be in a range of 80°-140°, for example, 80°, 90°, 100°, 110°, 120°, 130°, 140°, etc., that is, they are not parallel, for example, they are perpendicular to each other. An included angle formed between a plane on which the first insulating part 71 is located and a plane on which the second insulating part 72 is located may be in a range of 80°-140°, for example, 80°, 90°, 100°, 110°, 120°, 130°, 140°, etc., that is, they are not parallel, for example, they are perpendicular to each other.

In addition, the battery described above further includes a first connector that is located between the cell 2 and the first side plate 11 and connected with the first tab 21 and the first adapter 31 respectively (that is, the first adapter 31 is connected with the first tab 21 through the first connector). Specifically, the first adapter 31, the first connector and the first tab 21 may be welded in sequence.

Specifically, the first connector includes a first connection sheet 51 connected with the first adapter 31 and a fourth connection sheet 54 that is connected with a side of the first tab 21 facing away from the cell 2.

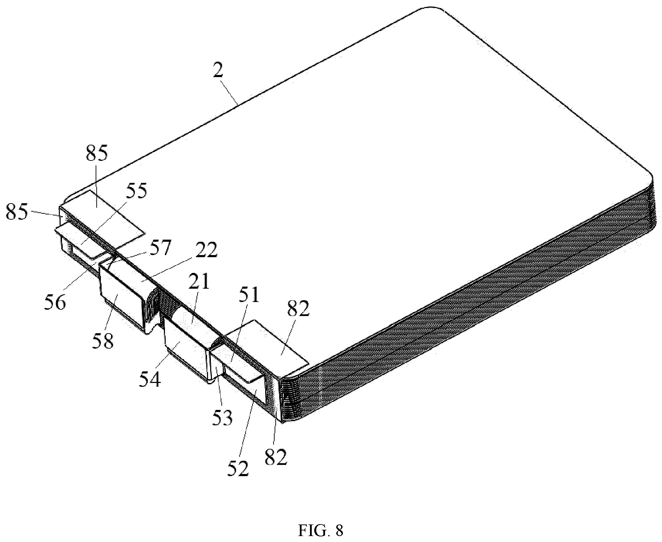

As shown in FIG. 8 to FIG. 11, the first connector may have a bending structure. The first connection sheet 51 is connected with the first adapter 31, and the fourth connection sheet 54 is connected with the first tab 21, specifically, welded to the first tab 21. A first included angle is formed between a surface of the first adapter 31 connected with the first connection sheet 51 and a surface of the fourth connection sheet 54 connected with the first tab 21. The included first angle is in a range of 80°-140°, for example, 80°, 90°, 100°, 120°, 130°, 140°, etc., that is, the surface of the first adapter 31 connected with the first connection sheet 51 and the surface of the fourth connection sheet 54 connected with the first tab 21 are not parallel, for example, they are perpendicular to each other. As a result, a connecting surface between the first adapter 31 and the first connection sheet 51 and a connecting surface between the fourth connection sheet 54 and the first tab 21 are staggered, so that the two connecting surfaces are substantially arranged along the width direction of the cell, which may not only reduce the spaces occupied by the first adapter 31 and the first connection sheet 51 in the chamber so as to make the connection between the first adapter 31 and the first connection sheet 51 and the connection between the fourth connection sheet 54 and the first tab 21 not interfere with each other at the same time, but also further improve the stability of the connection between the first adapter 31 and the first tab 21 through the first connector, thereby improving the stability, safety and service life of the battery, and so on.

In addition, a third included angle is formed between the surface of the first adapter 31 connected with the first connection sheet 51 and the surface of the first adapter 31 facing the first side plate 11, and the third included angle is in a range of 80°-140°, for example, 80°, 90°, 100°, 120°, 130°, 140°, that is, they are not parallel, for example, they may be perpendicular to each other. The surface of the first adapter 31 connected with the first connection sheet 51 is, for example, a top surface of the first adapter 31.

In addition, the cell 2 includes a plurality of electrode sheets arranged in a laminated manner, and the surface of the first connection sheet 51 connected with the first adapter 31 may be parallel with the surfaces of the electrode sheets.

In some embodiments, as shown in FIG. 8, the first connector also includes a first connection component, which is connected with the first connection sheet 51 and the fourth connection sheet 54 respectively. The first connection component includes a second connection sheet 52 and a third connection sheet 53, and the second connection sheet 52 is located between the first adapter 31 and the cell 2. In the direction from the first adapter 31 to the first tab 21, the third connection sheet 53 is located between the first adapter 31 and the first tab 21; the first connection sheet 51, the second connection sheet 52, the third connection sheet 53 and the fourth connection sheet 54 are connected in sequence.

Specifically, the first connector has a multiple bending structure, and the first connection sheet 51 thereof is connected with the fourth connection sheet 54 through the second connection sheet 52 and the third connection sheet 53 sequentially. The surface of the first connection sheet 51 is not parallel with a surface of the second connection sheet 52, for example, the surface of the first connection sheet 51is perpendicular to the surface of the second connection sheet 52. The surface of the second connection sheet 52 is not parallel with the surface of the third connection sheet 53, and may be perpendicular or not perpendicular to the surface of the third connection sheet 53. A surface of the fourth connection sheet 54 may be parallel with the surface of the second connection sheet 52. As a result, the first connection sheet 51, the second connection sheet 52, the third connection sheet 53 and the fourth connection sheet 54 are arranged in a structure of multiple bends to prevent the first connector from shaking in a left and right direction and in a front and back direction, which can further improve the stability of the connection between the first adapter 31 and the first tab 21.

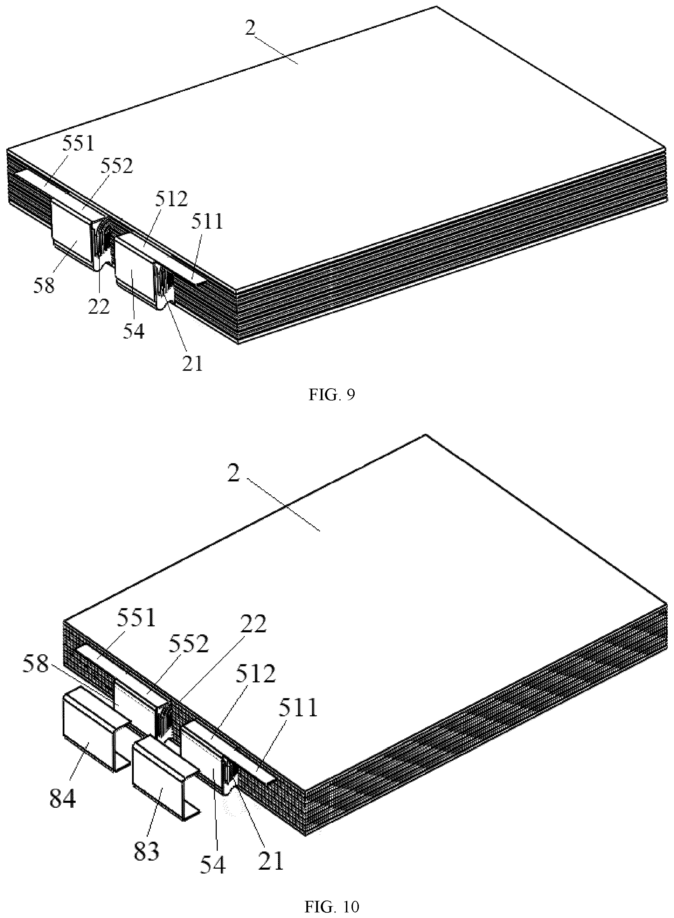

In other embodiments, as shown in FIG. 9 to FIG. 12, the first connection sheet 51 includes a first connection part 511 connected with the first adapter 31 and a second connection part 512 extending in the extension direction of the first side plate 11 (for example, the direction from the first adapter 31 to the first tab 21), and the second connection part 512 is connected with the fourth connection sheet 54.

Where, the first connection part 511 and the second connection part 512 are located on the same side of the first adapter 31, and is also located on the same side of the first tab 21. Specifically, the first connection part 511 may be located on a side of the first adapter 31 away from the sixth side plate 16 (a side of the first adapter 31 facing a fifth side plate 15). Specifically, the second connection part 512 may be located on a side of the first tab 21 away from the sixth side plate 16. An included angle that is formed between a surface of the second connection part 512 facing the first tab 21 and the surface of the fourth connection sheet 54 connected with the first tab 21 may be in a range of 80-140°, for example, 80°, 90°, 100°, 120°, 130°, 140°, that is, the two surfaces are not parallel, for example, they are perpendicular to each other.

Specifically, the first connection part 511 and the second connection part 512 may be integrally formed, so as to form the first connection sheet 51. A surface of the first connection part 511 and a surface of the second connection part 512 may be substantially flush, that is, the first connection sheet 51 may be in a straight structure without a relatively large degree of bending, but it is not limited to this. The surface of the first connection sheet 51 is not parallel with the surface of the fourth connection sheet 54, for example, it is perpendicular to the surface of the fourth connection sheet 54.

In addition, the first connection sheet 51 may be welded to the first adapter 31, and a welding mark is formed on a side of the first connection sheet 51 facing away from the first adapter 31. Where, when the first connection sheet 51 includes the first connection part 511 and the second connection part 512, the first connection part 511 may be welded to the first adapter 31, and a welding mark is formed on a side of the first connection part 511 facing away from the first adapter 31. Specifically, there is an overlapping region between a projection of the first adapter 31 in the thickness direction of the cell 2 and a projection of the first connection sheet 51 in the thickness direction of the cell 2, and a welding region of the first adapter 31 and the first connection sheet 51 is located in the overlapping region.

As shown in FIG. 13, the side of the first connection sheet 51 (or the first connection part 511 of the first connection sheet 51) facing away from the first adapter 31 is also provided with a sixth insulation layer 86.

As shown in FIG. 10 to FIG. 13, the battery described above may further include a third insulation layer 83, which is located between the first connector and the first side plate 11. Specifically, the third insulation layer 83 may include a first portion that is located on a side of the fourth connection sheet 54 facing away from the first tab 21.

In some embodiments, the cell 2 includes a plurality of electrode sheets arranged in a laminated manner, and the cell 2 has a first face and a second face that are disposed opposite to each other. The third insulation layer 83 also includes a second portion formed by extending from one end of the first portion close to the first face of the cell 2 toward a direction close to the cell 2 and a third portion formed by extending from an end of the first portion close to the second face of the cell 2 toward the direction close to the cell 2.

As shown in FIG. 10 to FIG. 13, the second portion, the first portion and the third portion of the third insulation layer 83 are connected in sequence and form a first groove. A bottom wall of the first groove is the first portion of the third insulation layer 83, and side walls of the first groove are the second portion and the third portion of the third insulation layer 83, respectively. The first tab 21 and a portion of the first connector connected with the first tab 21 (for example, the fourth connection sheet 54 and the second connection part 512 of the first connection sheet 51 located on a side surface of the first tab 21) are located in the first groove, and are covered by the third insulation layer 83, thereby preventing the first tab 21 or the first connection sheet 51 from contacting with the housing, while protecting the first tab 21 and the first connector, and preventing the first tab 21 and the first connector from bumping with the housing during the dropping of the battery. As a result, the battery performance such as stability and safety may be further improved.

Specifically, the first tab 21 has a first side surface and a second side surface that are disposed opposite to each other; the first side surface of the first tab 21 and the second side surface of the first tab 21 are located on opposite sides of the surface of the first tab 21 connected with the fourth connection sheet 54 (that is, the surface of the first tab 21 facing away from the cell 2). When the first connection sheet 51 and the fourth connection sheet 54 of the first connector are connected by the first connection component (that is, the second connection sheet 52 and the third connection sheet 53) (as shown in FIG. 8), the third insulation layer 83 includes a first portion located at the surface of the fourth connection sheet 54 facing away from the first tab 21, a second portion located on the first side surface of the first tab 21 and a third portion located on the second side surface of the first tab 21. When the first connection sheet 51 of the first connector includes the first connection part 511 and the second connection part 512 (as shown in FIG. 9 to FIG. 12), the second connection part 512 extends to the first side surface of the first tab 21, and the third insulation layer 83 includes the first portion located on the surface of the fourth connection sheet 54 facing away from the first tab 21, the second portion located on a surface of the second connection part 512 facing away from the first tab 21 and the third portion located on a the surface (the second side surface) of the first tab 21 facing away from the second connection part 512.

In some embodiments, as shown in FIG. 10 to FIG. 13, a projection of the first tab 21 in the thickness direction of the cell 2 (that is, the projection is perpendicular to the thickness direction of the cell 2) is located within a projection of the second portion of the third insulation layer 83 in the thickness direction of the cell 2; the projection of the first tab 21 in the thickness direction of the cell 2 is located within a projection of the third portion of the third insulation layer 83 in the thickness direction of the cell 2; a projection of the first tab 21 in the length direction of the cell 2 (that is, the projection is perpendicular to the length direction of the cell 2) is located within a projection of the first portion of the third insulation layer 83 in the length direction of the cell 2, that is, the third insulation layer 83 completely covers the first tab 21 and a portion of the first connector connected with the first tab 21. Where, the direction from the second portion to the first tab 21, the direction from the third portion to the first tab 21, the direction from the second portion to the third portion, and the thickness direction of the cell 2 may be parallel to each other, and the direction from the first portion to the first tab 21 is parallel with the length direction of the cell 2.

In some preferred embodiments, as shown in FIG. 12, the second portion of the third insulation layer 83 extends to the first face of the cell 2 and is bonded to the electrode sheet located on the first face of the cell 2 (an electrode sheet close to the housing 1); and the third portion of the third insulation layer 83 extends to the second face of the cell 2 and is bonded to the electrode sheet located on the second face of the cell 2 (an electrode sheet close to the housing 1). As a result, the third insulation layer 83 is wrapped on the side surfaces of the cell 2, which may further improve the stability of the cell 2.

As shown in FIG. 8, FIG. 11 and FIG. 12, a second insulation layer 82 may also be disposed between the first adapter 31 and the cell 2 to avoid a short circuit due to contact between the first adapter 31 and the electrode sheets having an opposite polarity in the cell 2. Specifically, when the first connector has the second connection sheet 52, the second insulation layer 82 is located between the second connection sheet 52 of the first connector and the cell 2.

In some embodiments, as shown in FIG. 8 and FIG. 12, the second insulation layer 82 extends to the first face of the cell 2 and is bonded to the electrode sheet located on the first face of the cell 2, and the second insulation layer 82 extends to the second face of the cell 2 and is bonded to the electrode sheet located on the second face of the cell 2. In this way, the second insulation layer 82 wraps the side surfaces of the cell 2 and can also fix the cell 2 and improve the stability of the cell 2.

In some embodiments, the cell 2 includes a plurality of electrode sheets arranged in a laminated manner, the electrode sheets includes a first electrode sheet which includes a first current collector, and the first tab 21 is disposed on the first current collector; along the direction from the first adapter 31 to the cell 2, a distance between the first adapter 31 and the first current collector is less than 1 mm, that is, the distance between the first adapter 31 and the first current collector in the direction from the first adapter 31 to the cell 2 is less than 1 mm, thereby further reducing the space occupied by the first adapter 31 and the first tab 21, improving the space utilization of the chamber, expanding an occupation area of the electrode sheets, and enhancing the energy density of the cell.

The cell 2 is also provided with a second tab 22, which has an opposite polarity to the first tab 21. The battery also includes a second adapter 32 which is electrically connected with the second tab 22 and is disposed between the first side plate 11 and the cell 2. A projection of the second adapter 32 on the first side plate 11 does not overlap with a projection of the second tab 22 on the first side plate 11 (that is, the projection of the second adapter 32 in a direction parallel with the extension direction of the first side plate 11 does not overlap with the projection of the second tab 22 in a direction parallel with the extension direction of the first side plate 11).

As a result, the second tab 22 and the second adapter 32 are not distributed in the direction from the cell 2 to the first side plate 11. Specifically, in the direction from the first side plate 11 to the cell 2, a distance from the first side plate 11 to the cell 2 is a₁; and a distance from a side of the second tab 22 connecting with the cell 2 to a side of the second tab 22 facing away from the cell 2 (that is, a side of the second tab 22 facing the first side plate 11) is b₂; a distance from a side of the second adapter 32 facing the cell 2 (that is, the side of the second adapter 32 facing away from the first side plate 11) to a side of the second adapter 32 facing the first side plate 11 (that is, a length of the second adapter 32 in the direction from the first side plate 11 to the cell 2) is c₂, a₁<b₂+c₂. As a result, the space of the chamber is further saved, and the battery performance such as energy density is improved.

Where, b₂ and b₁ may be equal or unequal, and c₂ and c₁ may be equal or unequal.

Specifically, the projections of the first tab 21, the second tab 22, the first adapter 31 and the second adapter 32 on the first side plate do not overlap with each other.

As shown in FIG. 11 to FIG. 13, a projection of the second adapter 32 on the second side plate 12 at least partially overlaps with a projection of the second tab 22 on the second side plate 12 (that is, the projection of the second adapter 32 in a direction perpendicular to the extension direction of the first side plate 11 at least partially overlaps with the projection of the second tab 22 in a direction perpendicular to the extension direction of the first side plate 11). That is, the second adapter 32 and the second tab 22 are arranged along the extension direction of the first side plate, and may be specifically arranged in the width direction of the cell, thereby facilitating the connection between the second adapter 32 and the second tab 22, further saving the space of the chamber and improving the battery performance such as energy density.

In addition, the projection of the first tab 21 on the second side plate 12 at least partially overlaps with the projection of the second tab 22 on the second side plate 12 (that is, the projection of the first tab 21 in a direction perpendicular to the extension direction of the first side plate 11 at least partially overlaps with the projection of the second tab 22 in a direction perpendicular to the extension direction of the first side plate 11). The projection of the first adapter 31 on the second side plate 12 at least partially overlaps with the projection of the second adapter 32 on the second side plate 12.

Specifically, as shown in FIG. 11 to FIG. 13, the projection of the first tab 21 perpendicular to the width direction of the cell 2 at least partially overlaps with the projection of the second tab 22 perpendicular to the width direction of the cell 2, and the projection of the second tab 32 perpendicular to the width direction of the cell 2 at least partially overlaps with the projection of the second tab 22 perpendicular to the width direction of the cell 2.

In addition, the first tab 21 and the second tab 22 may be located between the first adapter 31 and the second adapter 32, thereby making full use of the space between the first adapter 31 and the second adapter 32 and further expanding the size of the electrode sheet of the cell 2 in the length direction to increase the energy density of the cell. For example, in a direction parallel with the direction from the first adapter 31 to the first tab 21, the first tab 21 and the second tab 22 are located between the first adapter 31 and the second adapter 32, that is, the first adapter 31, the first tab 21, the second tab 22 and the second adapter 32 may be arranged in sequence. For example, the first adapter 31, the first tab 21, the second tab 22, and the second adapter 32 may be arranged in sequence in the width direction of the cell 2; and the first adapter 31, the first tab 21, the second tab 22 and the second adapter 32 may be substantially coaxially disposed.

But it is not limited to this, in other embodiments, it may also be that the first adapter 31 and the second adapter 32 are located between the first tab 21 and the second tab 22.

In addition, the first adapter 31, the first tab 21, the second tab 22 and the second adapter 32 generally do not protrude out of an outer edge of an end surface of the cell 2 (an end surface of the cell 2 facing the first side plate 11), and do not protrude out of the outer edge of the end surface of the cell 2 in the thickness direction or the width direction of the cell 2. That is, a projection of the cell 2 on the first side plate 11 covers a projection of the first adapter 31 on the first side plate 11; the projection of the cell 2 on the first side plate 11 covers the projection of the first tab 21 on the first side plate 11; the projection of the cell 2 on the first side plate 11 covers a projection of the second tab 22 on the first side plate 11; and the projection of the cell 2 on the first side plate 11 covers a projection of the second adapter 32 on the first side plate 11.

In some embodiments, a distance from a side of the second tab 22 facing away from the cell 2 to the side of the second tab 22 connected with the cell 2 is not greater than a length of the second adapter 32 in the direction from the first side plate 11 to the second tab 22, which is beneficial to further improve the battery performance such as energy density.

Specifically, the second adapter 32 may be in a block shape (or referred to as a second adapter block), and a thickness direction thereof may be parallel with the direction from the first side plate 11 to the second tab 22. That is, the length of the second adapter 32 in the direction from the first side plate 11 to the second tab 22 is the thickness of the second adapter 32.

In general, the direction from the first side plate 11 to the first tab 21, the direction from the first side plate 11 to the second tab 22, and the direction from the first side plate 11 to the cell 2 are parallel to each other.

In some embodiments, a length c₂ of the second adapter 32 in the direction from the first side plate 11 to the second tab 22 is 1 mm-4 mm, for example, 1 mm, 1.5 mm, 2 mm, 2.5 mm, 3 mm, 3.5 mm, 4 mm, etc.

Specifically, c₂ may be greater than, equal to, or less than c₁, preferably c₂≥c₁, further preferably c₂>c₁. Specifically, when the first tab 21 is connected with the housing 1 in an insulated manner, the second insulation sheet 7 is disposed between the first adapter 31 and the first side plate 11, and the second adapter 32 may be welded with the first side plate 11, at this time, c₂>c₁, and the difference (c₂-c₁) of the two may be substantially equal to the thickness of the second insulation sheet 7. When the first tab 21 is electrically connected with the housing 1 and the second tab 22 is connected with the housing 1 in an insulated manner, the second insulation sheet 7 may not be disposed between the first adapter 31 and the first side plate 11, the first adapter 31 is in direct contact with the first side plate 11, and the second insulation sheet 7 may be disposed between the second adapter 32 and the first side plate 11 (a connection structure between the second adapter 32 and the housing 1 may be similar to that between the first adapter 31 and the housing 1 through the post 42, which is not repeated); and in this time, c₂<c₁, the difference in thickness (c₁-c₂) between the two may be substantially equal to the thickness of the second insulation sheet 7. When both the first tab 21 and the second tab 22 are connected with the housing 1 in an insulated manner, the second insulation sheets 7 are respectively disposed between the first adapter 31 and the first side plate 11 and between the second adapter 32 and the first side plate 11 (the connection structure between the second adapter 32 and the housing 1 may be similar to that between the first adapter 31 and the housing 1 through the post 42, which is not repeated); and at this time, c₂=c₁. As a result, the space of the chamber may be further saved and the battery performance such as energy density may be improved.

The second tab 22 may be electrically connected with the housing 1, that is, the housing 1, the second adapter 32 and the second tab 22 are electrically connected, and the second adapter 32 may be welded with the second tab 22 and the housing 1, specifically, the second adapter 32 may be welded with the first side plate 11 of the housing 1.

The battery described above may further includes a second connector which is located between the cell 2 and the first side plate 11, and the second connector is connected with the second tab 22 and the second adapter 32 (that is, the second adapter 32 is connected with the second tab 22 through the second connector). Specifically, the second adapter 32, the second connector and the second tab 22 may be welded in sequence.

Specifically, the second connector may include a fifth connection sheet 55 connected with the second adapter 32 and an eighth connection sheet 58 connected with a side of the second tab 22 facing away from the cell 2. As shown in FIG. 8 to FIG. 12, the second connector may have a bending structure, the fifth connection sheet 55 is connected with the second adapter 32, and the eighth connection sheet 58 is connected with the second tab 22, specifically, such connection may be welding. A second included angle is formed between a surface of the second adapter 32 connected with the fifth connection sheet 55 and a surface of the eighth connection sheet 58 connected with the second tab 22, and the second included angle is in a range of 80-140°, for example, 80°, 90°, 100°, 120°, 130°, 140°, etc., that is, the two surfaces are not parallel to each other, for example, the two surfaces are perpendicular to each other. As a result, the stability of the second adapter 32 connected with the second tab 22 through the second connector may be further improved, thereby improving the stability, safety and service life of the battery, etc.

Where the surface of the first connection sheet 51 connected with the first adapter 31 and the surface of the fifth connection sheet 55 connected with the second adapter 32 may be parallel to each other; and the surface of the fourth connection sheet 54 connected with the first tab 21 and the surface of the eighth connection sheet 58 connected with the second tab 22 may be parallel to each other.

In addition, a fourth included angle is formed between the surface of the second adapter 32 connected with the fifth connection sheet 55 and a surface of the second adapter 32 facing the first side plate 11, and the fourth included angle is in range of 80-140°, for example, 80°, 90°, 100°, 120°, 130°, 140°, etc., that is, the two surfaces are not parallel to each other, for example, the two surfaces may be perpendicular to each other.

In addition, the cell 2 includes a plurality of electrode sheets arranged in a laminated manner, and the surface of the fifth connection sheet 55 connected with the second adapter 32 is parallel with the surface of the electrode sheet.

In some embodiments, as shown in FIG. 8, the second connector also includes a second connection component connected with the fifth connection sheet 55 and the eighth connection sheet 58 respectively. The second connection component includes the sixth connection sheet 56 and the seventh connection sheet 57, and the sixth connection sheet 56 is located between the second adapter 32 and the cell 2. In a direction from the second adapter 32 to the second tab 22, the seventh connection sheet 57 is located between the second adapter 32 and the second tab 22. The fifth connection sheet 55, the sixth connection sheet 56, the seventh connection sheet 57 and the eighth connection sheet 58 are connected in sequence.

Specifically, the second connector has a multiple-bending structure, and the fifth connection sheet 55 thereof is connected with the eighth connection sheet 58 through the sixth connection sheet 56 and the seventh connection sheet 57 in turn. A surface of the fifth connection sheet 55 is not parallel with a surface of the sixth connection sheet 56, for example, it is perpendicular to the surface of the sixth connection sheet 56. The surface of the sixth connection sheet 56 and a surface of the seventh connection sheet 57 are not parallel to each other and may be perpendicular or not perpendicular to each other. The surface of the eighth connection sheet 58 may be parallel with the surface of the sixth connection sheet 56. As a result, the stability of the connection between the second adapter 32 and the second tab 22 may be further improved.

In other embodiments, as shown in FIG. 9 to FIG. 12, the fifth connection sheet 55 includes a third connection part 551 connected with the second adapter 32 and a fourth connection part 552 extending in the extension direction of the first side plate 11 (for example, the direction from the second adapter 32 to the second tab 22), and the fourth connection part 552 is connected with the eighth connector 58. Where, the third connection part 551 and the fourth connection part 552 are located on the same side of the second adapter 32 and also on the same side of the second tab 22; the third connection part 551 may be specifically located on a side of the second adapter 32 facing away from the sixth side plate 16; and the fourth connection part 552 may be specifically located on a side of the second tab 22 facing away from the sixth side plate 16. A surface of the fourth connection part 552 facing the second tab 22 and a surface of the eighth connection sheet 58 connected with the second tab 22 are not parallel to each other, for example, the two surfaces are perpendicular to each other.

Specifically, the third connection part 551 and the fourth connection part 552 may be integrally formed to form the fifth connection sheet 55. The surface of the third connection part 551 and the surface of the fourth connection part 552 may be flush, that is, the fifth connection sheet 55 may be in a straight structure without a larger degree of bending, but it is not limited to this. The surface of the fifth connection sheet 55 is not parallel with the surface of the eighth connector 58, for example, it is perpendicular to the surface of the eighth connector 58. That is, the surface of the fifth connection sheet 55 connected with the second adapter 32 and the surface of the eighth connection sheet 58 connected with the second tab 22 are not parallel to each other, for example, are perpendicular to each other.

In addition, the fifth connection sheet 55 may be welded with the second adapter 32, and a welding mark is formed on a side of the fifth connection sheet 55 facing away from the second adapter 32. Where, when the fifth connection sheet 55 includes the third connection part 551 and the fourth connection part 552, the third connection part 551 may be welded with the second adapter 32, and a welding mark is formed on a side of the third connection part 551 facing away from the second transferring part 32. Specifically, there is an overlapping region between a projection of the second adapter 32 in the thickness direction of the cell 2 and a projection of the fifth connection sheet 55 in the thickness direction of the cell 2, and a region for welding the two is located in the overlapping region.

In addition, a side of the fifth connection sheet 55 (or the third connection part 551 of the fifth connection sheet 55) facing away from the second adapter 32 is provided with a sixth insulation layer 86. As shown in FIG. 13, the sixth insulation layer 86 may extend from the first connection sheet 51 to the fifth connection sheet 55. Specifically, it may extend from an end of the first connection sheet 51 facing away from the fifth connection sheet 55 to an end of the fifth connection sheet 55 facing away from the first connection sheet 51, and cover the first connection sheet 51 and the fifth connection sheet 5.

In addition, as shown in FIG. 10 to FIG. 13, a fourth insulation layer 84 may also be included, and the fourth insulation layer 84 is located between the second connector and the first side plate 11. Specifically, the fourth insulation layer 84 may include a fourth portion located on a surface of the eighth connecting plate 58 facing away from the second tab 22.

In some embodiments, the fourth insulation layer 84 also includes a fifth portion formed by extending from an end of the four portion close to the first face of the cell 2 to the direction close to the cell 2 and a sixth portion formed by extending from an end of the four portion close to the second face of the cell 2 to the direction close to the cell 2.

As shown in FIG. 10 to FIG. 13, the fifth portion, the fourth portion and the sixth portion of the fourth insulation layer 84 are sequentially connected and form a second groove, a bottom wall of the second groove is the four portion of the fourth insulation layer 84, and side walls of the second groove are the fifth portion and sixth portion of the fourth insulation layer 84, respectively. The second tab 22 and a portion of the second connector connected with the second tab 22 (for example, the eighth connection sheet 58 and the fourth connection part 552 of the fifth connection sheet 55 located on the side surface of the second tab 22) are located in the second groove and are covered by the fourth insulation layer 84. As a result, the battery performance such as stability and safety may be further improved.

Specifically, the second tab 22 has a first side surface and a second side surface which are opposite to each other, and the first side surface of the second tab 22 and the second side surface of the second tab 22 are located on two opposite sides of a surface of the second tab 22 connected with the eighth connection sheet 58, respectively. When the fifth connection sheet 55 and the eighth connection sheet 58 of the second connector are connected by the second connection component (that is, the sixth connection sheet 56 and the seventh connection sheet 57) (as shown in FIG. 8), the fourth insulation layer 84 includes the four portion located on a surface of the eighth connection sheet 58 facing away from the second tab 22, the fifth portion located on the first side surface of the second tab 22 and the sixth portion located on the second side surface of the second tab 22. When the fifth connection sheet 55 of the second connector includes the third connection part 551 and the fourth connection part 552 (as shown in FIG. 9 to FIG. 12), the fourth connection part 552 extends to the first side surface of the second tab 22, and the fourth insulation layer 84 includes the four portion located on the surface of the eighth connection sheet 58 facing away from the second tab 22, the fifth portion located on a surface of the fourth connection part 552 facing away from the second tab 22 and the sixth portion located on a surface (the second surface) of the second tab 22 facing away from the fourth connection part 552.

In some embodiments, as shown in FIG. 10 to FIG. 13, a projection of the second tab 22 in the thickness direction of the cell 2 is within a projection of the fifth portion of the fourth insulation layer 84 in the thickness direction of the cell 2; the projection of the second tab 22 in the thickness direction of the cell 2 is within a projection of the sixth portion of the fourth insulation layer 84 in the thickness direction of the cell 2; a projection of the second tab 22 in the length direction of the cell 2 is located in a projection of the four portion of the fourth insulation layer 84 in the length direction of the cell 2, that is, the fourth insulation layer 84 completely covers the second tab 22 and a portion of the second connector connected with the second tab 22. Where, the direction from the fifth portion to the second tab 22, the direction from the sixth portion to the second tab 22, the direction from the fifth portion to the sixth portion and the thickness direction of the cell 2 may be parallel to each other, and the direction from the four portion to the second tab 22 is parallel with the length direction of the cell 2.

In some preferred embodiments, as shown in FIG. 12, the fifth portion of the fourth insulation layer 84 extends to the first face of the cell 2 and is bonded to the electrode sheet located on the first face of the cell 2; the sixth portion of the fourth insulation layer 84 extends to the second face of the cell 2 and is bonded to the electrode sheet located on the second face of the cell 2. As a result, the fourth insulation layer 84 wraps the side surfaces of the cell 2, and the stability of the cell 2 may be further improved.

As shown in FIG. 8, FIG. 11 and FIG. 12, a fifth insulation layer 85 may also be disposed between the second adapter 32 and the cell 2 to avoid a short circuit due to the contact of the second adapter 32 with the electrode sheets having an opposite polarity in the cell 2. Specifically, when the second connector has the sixth connection sheet 56, the fifth insulation layer 85 is located between the sixth connection sheet 56 of the second connector and the cell 2.

In some embodiments, as shown in FIG. 8 and FIG. 12, the fifth insulation layer 85 extends to the first face of the cell 2 and is bonded to the electrode sheet located on the first face of the cell 2, and the fifth insulation layer 85 extends to the second face of the cell 2 and is bonded to the electrode sheet located on the second face of the cell 2. In this way, the fifth insulation layer 85 wraps the side surfaces of the cell 2 and can also fix the cell 2 and improve the stability of the cell 2.

In some embodiments, the cell 2 includes a plurality of electrode sheets arranged in a laminated manner, the electrode sheet includes a second electrode sheet which includes a second current collector, and the second tab 22 is disposed on the second current collector. Along the direction from the second adapter 32 to the cell 2, a distance between the second adapter 32 and the second current collector is less than 1 mm, that is, the distance between the second adapter 32 and the second current collector in the direction from the second adapter 32 to the cell 2 is less than 1 mm.

In general, the direction of the second adapter 32 to the cell 2, the direction of the first adapter 31 to the cell 2, and the direction of the first side plate 11 to the cell 2 are parallel to each other.

As shown in FIG. 11 and FIG. 12, the cell 2 has side surfaces between the first face of the cell 2 and the second face of the cell 2, and at least partial region of at least one side surface of the cell 2 is provided with a protective adhesive layer 9.

Specifically, the side surfaces of the cell 2 are side surfaces exposing the outer edges of the electrode sheets in the cell 2, which are formed by end surfaces of the plurality of electrode sheets disposed in a laminated manner perpendicular to the thickness direction thereof. That is, the side surfaces of the cell 2 are parallel with the thickness direction of the cell 2 (also the thickness direction of the electrode sheets).

As shown in FIG. 11 and FIG. 12, the side surfaces of the cell 2 include a first side surface, a second side surface, a third side surface and a fourth side surface sequentially connected. The first side surface is an end surface of the cell 2 facing the first side surface plate 11 (that is, a surface of the cell 2 provided with the first tab 21 and the second tab 22), and the second side surface and the fourth side surface are located on two opposite sides of the first side surface (or the third side surface), and the first side surface and the third side surface are located on two opposite sides of the second side surface (or fourth side surface). Where, the first side surface and the third side surface may be parallel with each other, the second side surface and the fourth side surface may be parallel with each other, and the first side surface (or third side surface) and the second side surface (or fourth side surface) may be perpendicular to each other. A direction from the first side surface to the third side surface may be the length direction of the cell 2, while a direction from the second side surface to the fourth side surface may be the width direction of the cell 2, or, the direction from the first side surface to the third side surface may also be the width direction of the cell 2, while the second side surface to the fourth side surface is the length direction of the cell 2.

Where, at least one of the second side surface, the third side surface and the fourth side surface is provided with the protective adhesive layer 9, that is, one or more of them (for example, all of them) are provided with the protective adhesive layer 9, but it is not limited to this. The first side surface may also be provided with the protective adhesive layer 9.

In addition, the number of protective adhesive layers 9 on any side surface of the cell 2 may be one or more. When the number of protective adhesive layers 9 on any side surface is 1, a length of the protective adhesive layer 9 of the side surface in the length direction of the side surface may be not greater than the length of the side surface, for example, they are substantially equal. When the number of protective adhesive layers 9 on any side surface is multiple, the multiple protective adhesive layers 9 are arranged at intervals on the side surface of the cell 2, so that there is a gap between any two adjacent protective adhesive layers 9, which facilitates the electrolyte to infiltrate into the electrode sheets in the cell and further optimizes the battery performances.

Taking the second side surface as an example, when the number of the protective adhesive layers 9 of the second side surface is one, the length of the protective adhesive layer 9 in the length direction of the second side surface may be not greater than the length of the second side surface, for example, it is substantially equal to the length of the second side surface; when the number of protective adhesive layers 9 of the second side surface is multiple, the multiple protective adhesive layers 9 may be distributed on the second side surface at intervals.

In some embodiments, as shown in FIG. 11 and FIG. 12, the protective adhesive layer 9 extends to the first face of the cell 2 and is bonded to the electrode sheet on the first face of the cell 2 and/or extends to the second face of the cell 2 and is bonded to the electrode sheet on the second face of the cell 2, thereby avoiding the electrode sheet exposed on the side surface of the cell 2 from contacting with the housing 1, while fixing the cell 2 and improving the battery performance such as safety and stability.

In addition, as shown in FIG. 12, the protective adhesive layer 9 may be provided with one or more fifth through holes 90, preferably with a plurality of fifth through holes 90, which may be evenly or unevenly distributed in a portion of the protective adhesive layer 9 opposite to the side surface of the cell (the portion of the protective adhesive layer 9 is stacked on the side surface (for example, the second side surface) of the cell 2). As a result, the fifth through hole 90 may improve the wetting of the electrolyte to the cell 2, so that the electrolyte may be better infiltrated into the electrode sheets to further optimize the performance of the battery. In particular, when the number of the protective adhesive layer 9 on any side surface of the cell 2 is one, the protective adhesive layer 9 on the side surface may be provided with one or more fifth through holes 90.

The protective adhesive layer 9 described above may specifically be adhesive tape, which generally is insulating and adhesive, and may be a conventional adhesive tape in the art, and it is not specifically limited.

The first adapter 31, the first tab 21, the second tab 22 and the second adapter 32 are located on the end surface of the cell 2 facing the first side plate 11, and the first face of the cell 2 and the second face of the cell 2 are respectively located on two opposite sides of the end surface of the cell 2 facing the first side plate 11.The direction from the first face of the cell 2 to the second face of the cell 2 is the thickness direction of the cell 2 (also the thickness direction of the electrode sheets), and the first face (surface) of the cell 2 and the second face (surface) of the cell 2 may be parallel with the surface of the electrode sheet (perpendicular to the thickness direction of the electrode sheet) and perpendicular to the end surface of the cell 2 facing the first side plate 11.

The electrode sheet located on the first face of the cell 2 and the electrode sheet located on the second face of the cell 2 are respectively the outermost electrode sheets of the cell 2, that is, the remaining electrode sheets are arranged in a laminated manner between the electrode sheet on the first face of the cell 2 and the electrode sheet on the second face of the cell 2. The polarities of the electrode sheet located on the first face of the cell 2 and of the electrode sheet located on the second face of the cell 2 may be the same or different, and may be a positive electrode sheet or a negative electrode sheet, a first electrode sheet or a second electrode sheet, and it is generally preferred that the electrode sheet located on the first face of the cell 2 and the electrode sheet located on the second face of the cell 2 are negative electrode sheets.

Specifically, as shown in FIG. 8 to FIG. 12, the cell 2 includes a plurality of electrode sheets arranged in a laminated manner, the electrode sheets include a first electrode sheet and a second electrode sheet, which are separated by a separator, and polarities of the first electrode sheet and the second electrode sheet are opposite. The first electrode sheet may be a positive electrode sheet or a negative electrode sheet, and accordingly, the second electrode sheet may be a negative electrode sheet or a positive electrode sheet. An end surface of a side of the cell 2 on which the tab (the first tab and the second tab) is provided (that is, the end surface of the side of the cell 2 facing the first side plate 11) is parallel with the thickness direction of the cell 2. Specifically, the electrode sheet in the cell 2 includes the current collector, and the tab (the first tab 21 and the second tab 22) is disposed on the current collector (the first current collector and the second current collector), specifically, it may be disposed at an end of the current collector. The end surface of the side of the cell 2 facing the first side plate 11 is formed by the end surface of the side provided with the tab of the plurality of electrode sheets arranged in a laminated manner (the end surface of the electrode sheet parallel with the thickness direction thereof).

The cell 2 may include a laminated cell 2 and/or a winding cell 2. The winding cell 2 is formed by laminating and winding a plurality of electrode sheets, and specifically formed by winding the first electrode sheet, the separator and the second electrode sheet after laminating them. The laminated cell 2 is formed by arranging the first electrode sheet, the separator and the second electrode sheet in a laminated manner. Specifically, the battery may include a lithium-ion battery, but is not limited to this.

Specifically, as shown in FIG. 1 to FIG. 3 and FIG. 13, the housing 1 may include the first side plate 11, the second side plate 12, the third side plate 13, the fourth side plate 14, the fifth side plate 15 and the sixth side plate 16. The first side plate 11, the second side plate 12, the third side plate 13 and the fourth side plate 14 are sequentially connected and are respectively located between the sixth side plate (or referred to the bottom plate) 16 and the fifth side plate (or referred to the cover plate) 15, thereby forming a closed chamber, and the cell 2 is placed in the chamber. The first side plate 11 and the third side plate 13 are located on two opposite sides of the second side plate 12 (or the fourth side plate 14); and the second side plate 12 and the fourth side plate 14 are located on two opposite sides of the first side plate 11 (or the third side plate 13). The fifth side plate 15 and the sixth side plate 16 are located on the opposite sides of the first side plate 11 (or the second side plate 12, or the third side plate 13, or the fourth side plate 14), respectively. A direction from the fifth side plate 15 to the sixth side plate 16 is the thickness direction of the housing 1, a direction from the first side plate 11 to the third side plate 13 may be the length direction of the housing 1, and a direction from the second side plate 12 to the fourth side plate 14 is the width direction of the housing 1; or, the direction from the first side plate 11 to the third side plate 13 is the width direction of the housing 1, while the direction from the second side plate 12 to the fourth side plate 14 is the length direction of the housing 1. One of the first face of the cell 2 and the second face of the cell 2 is a surface of the cell 2 facing the fifth side plate 15, and the other is a surface of the cell 2 facing the sixth side plate 16. The sixth insulation layer 86 is located between the first connecting sheet 51 and the fifth side plate 15 and/or between the fifth connection sheet 55 and the fifth side plate 15.

Where, arc transition parts 17 may be connected between the first side plate 11 and the second side plate 12, between the second side plate 12 and the third side plate 13, and between the third side plate 13 and the fourth side plate 14, respectively. That is, connection portions of two adjacent side plates are combined through an arc. Specifically, a side away from the chamber and a side facing the chamber of a cross-section of the arc transition part 17 that is perpendicular to a first direction are arc-lines respectively, and the arc transition part 17 forms a groove with an opening toward the chamber, where the first direction is parallel with the direction from the fifth side plate 15 to the sixth side plate 16 (that is, the thickness direction of the housing 1).

The housing 1 may also be provided with a thinning part 151, and the mechanical strength of the thinning part 151 is less than that of other portions of the housing 1 except for the thinning part 151. Therefore, when the internal pressure of the battery is too large, the pressure may be released preferentially through the thinning part 151 to avoid the occurrence of battery explosion and other phenomena. Specifically, the thinning part 151 may be disposed in the fifth side plate 15 (the surface of the fifth side plate 15 may be parallel with the surface of the electrode sheet). Specifically, a thickness of the thinning part 151 is less than that of other portions of the housing 1 except for the thinning portion 151.

In addition, the housing 1 is also provided with a liquid injection hole 100 and a sealing sheet for sealing the liquid injection hole 100. The liquid injection hole 100 is configured for injecting electrolyte into the chamber. After the electrolyte is injected, the liquid injection hole 100 is sealed with the sealing sheet. The sealing sheet may include a metal sheet, which may be welded with the housing 1 around the liquid injection hole 100 to seal the liquid injection hole 100.

Specifically, the liquid injection hole 100 may be disposed in the first side plate 11, and specifically, it may be located between a connection portion of the first side plate 11 and the second connector and a connection portion of the first side plate 11 and the first adapter 31 (or the external connector 41). The sealing sheet may be welded with a side of the first side plate 11 facing away from the chamber, and may be specifically welded to a portion of the first side plate 11 around the liquid injection hole 100 to seal the liquid injection hole 100.

The welding as described above may be laser welding, for example, the first connection sheet 51 of the first connector may be connected with the first adapter 31 by laser welding, the liquid injection hole 100 may be sealed by laser welding with a sealing sheet, etc.

The first tab 21 may be a positive tab or a negative tab, that is, one of the first tab 21 and the second tab 22 is the positive tab and the other is the negative tab, preferably the first tab 21 is the positive tab.

Specifically, the housing 1 may be a metal packaging housing, that is, it may be made of a metal material, that also is, the first side plate 11, the second side plate 12, the third side plate 13, the fourth side plate 14, the fifth side plate 15 and the sixth side plate 16 may be made of a metal material, for example, aluminum, aluminum alloy, nickel, iron or nickel-iron alloy, etc.

In general, when the housing 1 is electrically connected with the positive tab, the housing 1 may be made of a material with the same polarity as the positive tab. For example, the housing 1 and the positive tab are made of aluminum or aluminum alloy, respectively, and the specific kinds of the materials of the two may be the same or different (when the materials of the two are different, for example, the material of the positive tab is aluminum, while the material of housing 1 is aluminum alloy). When the housing 1 is electrically connected with the negative tab, the housing 1 and the negative tab are made of materials with the same polarity, for example, they are nickel, iron or nickel-iron alloy, respectively, and the specific kinds of the materials of the two may be the same or different.

In addition, the material of the first adapter 31, the material of the first connector, and the material of the first tab 21 may be those with the same polarity. For example, the first tab 21 is the positive tab, the material of the first adapter 31, the material of the first connector, and the material of the first tab 21 may be aluminum or aluminum alloy, respectively, and the specific kinds of these materials may be the same or different. The material of the second adapter 32, the material of the second connector and the material of the second tab 22 may be materials with the same polarity. For example, the second tab 22 is the negative tab, the material of the second adapter 32, the material of the second connector and the material of the second tab 22 may be nickel, iron or nickel-iron alloy, respectively, and the specific kinds of these materials may be the same or different.

## Claims

1. A battery, comprising:
a housing (1) enclosed to form a chamber and comprising a first side plate (11);
a cell (2) located in the chamber and provided with a first tab (21); and
a first adapter (31) electrically connected with the first tab (21), wherein the first adapter (31)is disposed between the first side plate (11) and the cell (2), and a projection of the first adapter (31) on the first side plate (11) does not overlap with a projection of the first tab (21) on the first side plate (11), and
wherein the battery further comprises a first connector located between the cell (2) and the first side plate (11) and connected with the first tab (21) and the first adapter (31), respectively, and
the first connector comprises a first connection sheet (51) connected with the first adapter (31) and a fourth connection sheet (54) connected with a side of the first tab (21) facing away from the cell (2).

2. The battery according to claim 1, wherein the housing (1) comprises a second side plate (12) connected with the first side plate (11), and a projection of the first adapter (31) on the second side plate (12) at least partially overlaps with a projection of the first tab (21) on the second side plate (12); and/or,
an end surface of a side of the cell (2) provided with the first tab (21) is parallel with a width direction of the cell (2); and/or,
a distance from a side of the first tab (21) facing away from the cell (2) to a side of the first tab (21) connected with the cell (2) is not greater than a length of the first adapter (31) along a direction from the first side plate (11) to the first tab (21); and/or,
along the direction from the first side plate (11) to the first tab (21), a length of the first adapter (31) is 1 mm-3 mm.

3. The battery according to claim 1, wherein the battery further comprises an external connector (41) disposed on a side of the first side plate (11) facing away from the chamber, the external connector (41) comprises an outward-protruding post (42) and the first adapter (31) comprises a first through hole (310) corresponding to the post (42), and the post (42) penetrates through the first side plate (11) and is connected with the first adapter (31) through the first through hole (310).

4. The battery according to claim 3, wherein the first through hole (310) of the first adapter (31) comprises a first hole section and a second hole section which are connected with each other, and the second hole section is located on a side of the first hole section close to the cell (2); and
an end of the post (42) close to the cell (2) extends outward to form an extension part (43) corresponding to the second hole section; and/or,
an end surface of the post (42) close to the cell (2) is flush with a side surface of the first adapter (31) close to the cell (2).

5. The battery according to claim 3, wherein an end of the post (42) close to the cell (2) protrudes out of the first through hole (310) and extends outward along a circumferential direction of the first through hole (310) to form an extension part (43) connected with a side surface of the first adapter (31) close to the cell (2).

6. The battery according to claim 3, wherein
a first insulation sheet (6) is also disposed between the external connector (41) and the first side plate (11), and a second insulation sheet (7) is also disposed between the first adapter (31) and the first side plate (11), and the post (42) penetrates through the first insulation sheet (6) and the second insulation sheet (7); and/or,
a first insulation layer (8) is disposed between the post (42) and the first side plate (11); and/or,
a second insulation layer (82) is disposed between the first adapter (31) and the cell (2).

7. The battery according to claim 6, wherein,
a projection of the first insulation sheet (6) on the first side plate (11) covers a projection of the external connector (41) on the first side plate (11); and/or, a projection of the second insulation sheet (7) on the first side plate (11) covers a projection of the first adapter (31) on the first side plate (11);
optionally, the battery comprises a plurality of electrode sheets arranged in a laminated manner, the cell (2) has a first face and a second face that are disposed opposite to each other, wherein the second insulation layer (82) extends to the first face of the cell (2) and is bonded to the electrode sheet located on the first face of the cell (2), and/or, the second insulation layer (82) extends to the second face of the cell (2) and is bonded to the electrode sheet located on the second face of the cell (2).

8. The battery according to claim 1, wherein the first connector further comprises a connection component connected with the first connection sheet (51) and the fourth connection sheet (54), respectively; the connection component comprises a second connection sheet (52) and a third connection sheet (53); the second connection sheet (52) is located between the first adapter (31) and the cell (2); the third connection sheet (53) is located between the first tab (21) and the first adapter (31) in a direction from the first adapter (31) to the first tab (21); and the first connection sheet (51), the second connection sheet (52), the third connection sheet (53) and the fourth connection sheet (54) are sequentially connected;
optionally, the first connection sheet (51) comprises a first connection part (511) connected with the first adapter (31) and a second connection part (512) extending in an extension direction of the first side plate (11), and the second connection part (512) is connected with the fourth connection sheet (54);
optionally, a side of the first connection sheet (51) facing away from the first adapter (31) is further provided with a sixth insulation layer (86); and/or, a first included angle is formed between a surface of the first adapter (31) connected with the first connection sheet (51) and a surface of the fourth connection sheet (54) connected with the first tab (21), and the first included angle is in a range of 80°-120°; and/or, the first connection sheet (51) is welded with the first adapter (31); and/or, the cell (2) comprises a plurality of electrode sheets arranged in a laminated manner, and a surface of first connection sheet (51) connected with the first adapter (31) is parallel with a surface of the electrode sheet.

9. The battery according to claim 1, wherein the battery further comprises a third insulation layer (83) located between the first connector and the first side plate (11).

10. The battery according to claim 9, wherein the third insulation layer (83) comprises a first portion located on a surface of the fourth connection sheet (54) facing away from the first tab (21).

11. The battery according to claim 10, wherein
the cell (2) comprises a plurality of electrode sheets arranged in a laminated manner;
the cell (2) has a first face and a second face that are disposed opposite to each other;
the third insulation layer (83) further comprises a second portion formed by extending from an end of the first portion close to the first face of the cell (2) to a direction close to the cell (2) and a third portion formed by extending from an end of the first portion close to the second face of the cell (2) to the direction close to the cell (2).

12. The battery according to claim 11, wherein
a projection of the first tab (21) in a thickness direction of the cell (2) is located within a projection of the second portion of the third insulation layer (83) in the thickness direction of the cell (2); and/or, the projection of the first tab (21) in a thickness direction of the cell (2) is located within a projection of the third portion of the third insulation layer (83) in the thickness direction of the cell (2); and/or, a projection of the first tab (21) in a length direction of the cell (2) is located within a projection of the first portion of the third insulation layer (83) in the length direction of the cell (2);
optionally, the second portion of the third insulation layer (83) extends to the first face of the cell (2) and is bonded to the electrode plate located on the first face of the cell (2); and/or, the third portion of the third insulation layer (83) extends to the second face of the cell (2) and is bonded to the electrode plate located on the second face of the cell (2).

13. The battery according to claim 1, wherein
the cell (2) comprises a plurality of electrode sheets arranged in a laminated manner, the electrode plate comprises a first current collector, and the first tab (21) is disposed on the first current collector; and a distance between the first adapter (31) and the first current collector is less than 1 mm in a direction from the first adapter (31) to the cell (2);
optionally, the cell (2) is further provided with a second tab (22), the second tab (22) and the first tab (21) having opposite polarities; and the battery further comprises a second adapter (32) electrically connected with the second tab (22), and the second adapter (32) is disposed between the first side plate (11) and the cell (2), and a projection of the second adapter (32) on the first side plate (11) does not overlap with a projection of the second tab (22) on the first side plate (11).

14. The battery according to claim 13, wherein the housing (1) comprises a second side plate (12) connected with the first side plate (11), and a projection of the first tab (21) on the second side plate (12) at least partially overlaps with a projection of the second tab (22) on the second side plate (12); and/or,
a projection of the second adapter (32) on the second side plate (12) at least partially overlaps with the projection of the second tab (22) on the second side plate (12); and/or,
the first tab (21) and the second tab (22) are located between the first adapter (31) and the second adapter (32); and/or,
the second adapter (32) is welded with the first side plate (11); and/or,
a distance between a side of the second tab (22) facing away from the cell (2) to a side of the second tab (22) connected with the cell (2) is not greater than a length of the second adapter (32) in a direction from the first side plate (11) to the second tab (22); and/or,
the length of the second adapter (32) is 1 mm-4 mm in the direction from the first side plate (11) to the second tab (22); and/or,
the length of the second adapter (32) is equal to or greater than a length of the first adapter (31) in the direction from the first side plate (11) to the second tab (22).

15. The battery according to claim 1, wherein
the housing (1) comprises a fifth side plate (15) connected with the first side plate (11), the fifth side plate (15) is provided with a thinning part (151), and a mechanical strength of the thinning part (151) is less than a mechanical strength of other portions of the housing (1) except for the thinning part (151), and/or
the cell (2) comprises a plurality of electrode sheets arranged in a laminated manner, a surface of the fifth side plate (15) is parallel with a surface of the electrode sheet.

## Patentansprüche

1. Batterie, umfassend:
ein Gehäuse (1), das zum Bilden einer Kammer geschlossen ist und umfassend eine erste Seitenplatte (11);
eine Zelle (2), die sich in der Kammer befindet und mit einer ersten Lasche (21) versehen ist; und
einen ersten Adapter (31), der elektrisch mit der ersten Lasche (21) verbunden ist, wobei der erste Adapter (31) zwischen der ersten Seitenplatte (11) und der Zelle (2) angeordnet ist und ein Vorsprung des ersten Adapters (31) an der ersten Seitenplatte (11) nicht mit einem Vorsprung der ersten Lasche (21) an der ersten Seitenplatte (11) überlappt, und
wobei die Batterie ferner einen ersten Verbinder umfasst, der sich zwischen der Zelle (2) und der ersten Seitenplatte (11) befindet und jeweils mit der ersten Lasche (21) und dem ersten Adapter (31) verbunden ist, und
der erste Verbinder eine erste Verbindungsfolie (51), die mit dem ersten Adapter (31) verbunden ist, und eine vierte Verbindungsfolie (54), die mit einer von der Zelle (2) abgewandten Seite der ersten Lasche (21) verbunden ist, umfasst.

2. Batterie nach Anspruch 1, wobei das Gehäuse (1) eine zweite Seitenplatte (12) umfasst, die mit der ersten Seitenplatte (11) verbunden ist, und ein Vorsprung des ersten Adapters (31) an der zweiten Seitenplatte (12) zumindest teilweise mit einem Vorsprung der ersten Lasche (21) an der zweiten Seitenplatte (12) überlappt; und/oder
eine Endfläche einer Seite der Zelle (2), die mit der ersten Lasche (21) versehen ist, parallel zu einer Breitenrichtung der Zelle (2) ist; und/oder
ein Abstand von einer Seite der ersten Lasche (21), die von der Zelle (2) abgewandt ist, zu einer mit der Zelle (2) verbundenen Seite der ersten Lasche (21) nicht größer ist als eine Länge des ersten Adapters (31) entlang einer Richtung von der ersten Seitenplatte (11) zu der ersten Lasche (21); und/oder
die Länge des ersten Adapters (31) entlang der Richtung von der ersten Seitenplatte (11) zu der ersten Lasche (21) 1 mm bis 3 mm ist.

3. Batterie nach Anspruch 1, wobei die Batterie ferner einen externen Verbinder (41) umfasst, der an einer von der Kammer abgewandten Seite der ersten Seitenplatte (11) angeordnet ist, wobei der externe Verbinder (41) einen nach außen hervorstehenden Zapfen (42) umfasst und der erste Adapter (31) ein dem Zapfen (42) entsprechendes erstes Durchgangsloch (310) umfasst, und der Zapfen (42) die erste Seitenplatte (11) durchdringt und über das erste Durchgangsloch (310) mit dem ersten Adapter (31) verbunden ist.

4. Batterie nach Anspruch 3, wobei das erste Durchgangsloch (310) des ersten Adapters (31) einen ersten Lochbereich und einen zweiten Lochbereich umfasst, die miteinander verbunden sind, und der zweite Lochbereich auf einer Seite des ersten Lochbereichs nahe der Zelle (2) angeordnet ist; und
sich ein Ende des Zapfens (42) nahe der Zelle (2) nach außen erstreckt, um ein dem zweiten Lochbereich entsprechenden Verlängerungsteil (43) zu bilden; und/oder
eine Endfläche des Zapfens (42) nahe der Zelle (2) bündig mit einer Seitenfläche des ersten Adapters (31) nahe der Zelle (2) ist.

5. Batterie nach Anspruch 3, wobei ein Ende des Zapfens (42) nahe der Zelle (2) aus dem ersten Durchgangsloch (310) hervorsteht und sich entlang einer Umfangsrichtung des ersten Durchgangslochs (310) nach außen erstreckt, um ein Verlängerungsteil (43) zu bilden, das mit einer Seitenfläche des ersten Adapters (31) nahe der Zelle (2) verbunden ist.

6. Batterie nach Anspruch 3, wobei
eine erste Isolierfolie (6) auch zwischen dem externen Verbinder (41) und der ersten Seitenplatte (11) angeordnet ist und eine zweite Isolierfolie (7) auch zwischen dem ersten Adapter (31) und der ersten Seitenplatte (11) angeordnet ist, und der Zapfen (42) die erste Isolierfolie (6) und die zweite Isolierfolie (7) durchdringt; und/oder
eine erste Isolierschicht (8) zwischen dem Zapfen (42) und der ersten Seitenplatte (11) angeordnet ist; und/oder
eine zweite Isolierschicht (82) zwischen dem ersten Adapter (31) und der Zelle (2) angeordnet ist.

7. Batterie nach Anspruch 6, wobei
ein Vorsprung der ersten Isolierfolie (6) auf der ersten Seitenplatte (11) einen Vorsprung des externen Verbinders (41) an der ersten Seitenplatte (11) bedeckt; und/oder ein Vorsprung der zweiten Isolierfolie (7) an der ersten Seitenplatte (11) einen Vorsprung des ersten Adapters (31) an der ersten Seitenplatte (11) bedeckt;
optional die Batterie eine Vielzahl von Elektrodenfolien umfasst, die auf laminierte Weise angeordnet sind, die Zelle (2) eine erste und eine zweite Fläche aufweist, die einander gegenüberliegend angeordnet sind,
wobei sich die zweite Isolierschicht (82) zu der ersten Seite der Zelle (2) erstreckt und an die Elektrodenfolie gebunden ist, die sich auf der ersten Seite der Zelle (2) befindet, und/oder sich die zweite Isolierschicht (82) zu der zweiten Seite der Zelle (2) erstreckt und an die Elektrodenfolie gebunden ist, die sich auf der zweiten Seite der Zelle (2) befindet.

8. Batterie nach Anspruch 1, wobei der erste Verbinder ferner eine Verbindungskomponente umfasst, die jeweils mit der ersten Verbindungsfolie (51) und der vierten Verbindungsfolie (54) verbunden ist; die Verbindungskomponente eine zweite Verbindungsfolie (52) und eine dritte Verbindungsfolie (53) umfasst; die zweite Verbindungsfolie (52) zwischen dem ersten Adapter (31) und der Zelle (2) angeordnet ist; sich die dritte Verbindungsfolie (53) zwischen der ersten Lasche (21) und dem ersten Adapter (31) in einer Richtung von dem ersten Adapter (31) zu der ersten Lasche (21) befindet; und die erste Verbindungsfolie (51), die zweite Verbindungsfolie (52), die dritte Verbindungsfolie (53) und die vierte Verbindungsfolie (54) nacheinander verbunden sind;
optional die erste Verbindungsfolie (51) ein erstes Verbindungsteil (511), das mit dem ersten Adapter (31) verbunden ist, und ein zweites Verbindungsteil (512), das sich in einer Verlängerungsrichtung der ersten Seitenplatte (11) erstreckt, umfasst, wobei das zweite Verbindungsteil (512) mit der vierten Verbindungsfolie (54) verbunden ist;
optional eine Seite der ersten Verbindungsfolie (51), die von dem ersten Adapter (31) abgewandt ist, ferner mit einer sechsten Isolierschicht (86) versehen ist; und/oder zwischen einer Oberfläche des ersten Adapters (31), der mit der ersten Verbindungsfolie (51) verbunden ist, und einer Oberfläche der vierten Verbindungsfolie (54), die mit der ersten Lasche (21) verbunden ist, ein erster eingeschlossener Winkel gebildet ist, und der erste eingeschlossene Winkel in einem Bereich von 80° bis 120° ist; und/oder die erste Verbindungsfolie (51) mit dem ersten Adapter (31) verschweißt ist; und/oder die Zelle (2) eine Vielzahl von Elektrodenfolien umfasst, die auf laminierte Weise angeordnet sind, und eine Oberfläche der ersten Verbindungsfolie (51), die mit dem ersten Adapter (31) verbunden ist, parallel zu einer Oberfläche der Elektrodenfolie ist.

9. Batterie nach Anspruch 1, wobei die Batterie ferner eine dritte Isolierschicht (83) umfasst, die sich zwischen dem ersten Verbinder und der ersten Seitenplatte (11) befindet.

10. Batterie nach Anspruch 9, wobei die dritte Isolierschicht (83) einen ersten Abschnitt umfasst, der sich auf einer Oberfläche der vierten Verbindungsfolie (54) befindet, die von der ersten Lasche (21) abgewandt ist.

11. Batterie nach Anspruch 10, wobei
die Zelle (2) eine Vielzahl von Elektrodenfolien umfasst, die auf laminierte Weise angeordnet sind,
die Zelle (2) eine erste und eine zweite Fläche aufweist, die einander gegenüberliegend angeordnet sind;
wobei die dritte Isolierschicht (83) ferner einen zweiten Abschnitt, der durch Erstrecken von einem Ende des ersten Abschnitts nahe der ersten Seite der Zelle (2) in eine Richtung nahe der Zelle (2) gebildet ist, und einen dritten Abschnitt, der durch Erstrecken von einem Ende des ersten Abschnitts nahe der zweiten Seite der Zelle (2) in eine Richtung nahe der Zelle (2) gebildet ist, umfasst.

12. Batterie nach Anspruch 11, wobei
sich ein Vorsprung der ersten Lasche (21) in einer Stärkenrichtung der Zelle (2) innerhalb eines Vorsprungs des zweiten Abschnitts der dritten Isolierschicht (83) in der Stärkenrichtung der Zelle (2) befindet; und/oder sich der Vorsprung der ersten Lasche (21) in einer Stärkenrichtung der Zelle (2) innerhalb eines Vorsprungs des dritten Abschnitts der dritten Isolierschicht (83) in der Stärkenrichtung der Zelle (2) befindet; und/oder sich ein Vorsprung der ersten Lasche (21) in Längsrichtung der Zelle (2) innerhalb eines Vorsprungs des ersten Abschnitts der dritten Isolierschicht (83) in Längsrichtung der Zelle (2) befindet;
optional sich der zweite Abschnitt der dritten Isolierschicht (83) zu der ersten Seite der Zelle (2) erstreckt und an die Elektrodenplatte gebunden ist, die sich auf der ersten Seite der Zelle (2) befindet; und/oder sich der dritte Abschnitt der dritten Isolierschicht (83) zu der zweiten Seite der Zelle (2) erstreckt und an die Elektrodenplatte gebunden ist, die sich auf der zweiten Seite der Zelle (2) befindet.

13. Batterie nach Anspruch 1, wobei
die Zelle (2) eine Vielzahl von Elektrodenfolien umfasst, die auf laminierte Weise angeordnet sind, die Elektrodenplatte einen ersten Stromkollektor umfasst und die erste Lasche (21) an dem ersten Stromkollektor angeordnet ist; und ein Abstand zwischen dem ersten Adapter (31) und dem ersten Stromkollektor in einer Richtung von dem ersten Adapter (31) zu der Zelle (2) weniger als 1 mm ist;
optional die Zelle (2) ferner mit einer zweiten Lasche (22) versehen ist, wobei die zweite Lasche (22) und die erste Lasche (21) entgegengesetzte Polaritäten aufweisen; und die Batterie ferner einen zweiten Adapter umfasst, der elektrisch mit der zweiten Lasche (22) verbunden ist, und der zweite Adapter (32) zwischen der ersten Seitenplatte (11) und der Zelle (2) angeordnet ist und ein Vorsprung des zweiten Adapters (32) an der ersten Seitenplatte (11) nicht mit einem Vorsprung der zweiten Lasche (22) an der ersten Seitenplatte (11) überlappt.

14. Batterie nach Anspruch 13, wobei das Gehäuse (1) eine zweite Seitenplatte (12) umfasst, die mit der ersten Seitenplatte (11) verbunden ist, und wobei ein Vorsprung der ersten Lasche (21) an der zweiten Seitenplatte (12) zumindest teilweise mit einem Vorsprung der zweiten Lasche (22) an der zweiten Seitenplatte (12) überlappt; und/oder
ein Vorsprung des zweiten Adapters (32) an der zweiten Seitenplatte (12) zumindest teilweise mit dem Vorsprung der zweiten Lasche (22) an der zweiten Seitenplatte (12) überlappt; und/oder
sich die erste Lasche (21) und die zweite Lasche (22) zwischen dem ersten Adapter (31) und dem zweiten Adapter (32) befinden; und/oder
der zweite Adapter (32) mit der ersten Seitenplatte (11) verschweißt ist; und/oder
ein Abstand zwischen einer Seite der zweiten Lasche (22), die von der Zelle (2) abgewandt ist, und einer Seite der zweiten Lasche (22), die mit der Zelle (2) verbunden ist, nicht größer ist als eine Länge des zweiten Adapters (32) in einer Richtung von der ersten Seitenplatte (11) zu der zweiten Lasche (22); und/oder
die Länge des zweiten Adapters (32) in Richtung von der ersten Seitenplatte (11) zu der zweiten Lasche (22) 1 mm bis 4 mm ist; und/oder
die Länge des zweiten Adapters (32) gleich wie oder größer als die Länge des ersten Adapters (31) in Richtung von der ersten Seitenplatte (11) zu der zweiten Lasche (22) ist.

15. Batterie nach Anspruch 1, wobei
das Gehäuse (1) eine fünfte Seitenplatte (15) umfasst, die mit der ersten Seitenplatte (11) verbunden ist, die fünfte Seitenplatte (15) mit einem verdünnten Teil (151) versehen ist und eine mechanische Festigkeit des verdünnten Teils (151) geringer ist als die mechanische Festigkeit anderer Abschnitte des Gehäuses (1) mit Ausnahme des verdünnten Teils (151), und/oder
die Zelle (2) eine Vielzahl von Elektrodenfolien umfasst, die auf laminierte Weise angeordnet sind, wobei eine Oberfläche der fünften Seitenplatte (15) parallel zu einer Oberfläche der Elektrodenfolie ist.

## Revendications

1. Batterie comprenant :
un boîtier (1) fermé pour former une chambre et incluant une première plaque latérale (11) ;
une cellule (2) située dans la chambre et pourvue d'une première languette (21) ; et
un premier adaptateur (31) électriquement raccordé à la première languette (21), dans laquelle le premier adaptateur (31) est disposé entre la première plaque latérale (11) et la cellule (2), et une saillie du premier adaptateur (31) sur la première plaque latérale (11) ne chevauche pas sur une saillie de la première languette (21) sur la première plaque latérale (11), et
dans laquelle la batterie comprend en outre un premier connecteur situé entre la cellule (2) et la première plaque latérale (11) et respectivement raccordé à la première languette (21) et au premier adaptateur (31), et
le premier connecteur comprend une première feuille de connexion (51) raccordée au premier adaptateur (31) et une quatrième feuille de connexion (54) raccordée à un côté de la première languette (21) orienté à l'opposé de la cellule (2).

2. Batterie selon la revendication 1, dans laquelle le boîtier (1) comprend une deuxième plaque latérale (12) raccordée à la première plaque latérale (11), et une saillie du premier adaptateur (31) sur la deuxième plaque latérale (12) chevauche au moins partiellement sur une saillie de la première languette (21) sur la deuxième plaque latérale (12) ; et/ou,
une surface d'extrémité d'un côté de la cellule (2) pourvu de la première languette (21) est parallèle à une direction de largeur de la cellule (2) ; et/ou,
une distance allant d'un côté de la première languette (21) orienté à l'opposé de la cellule (2) jusqu'à un côté de la première languette (21) raccordé à la cellule (2) n'est pas supérieure à une longueur du premier adaptateur (31) le long d'une direction allant de la première plaque latérale (11) vers la première languette (21) ; et/ou,
selon la direction allant de la première plaque latérale (11) vers la première languette (21), une longueur du premier adaptateur (31) est de 1 mm à 3 mm.

3. Batterie selon la revendication 1, dans laquelle la batterie comprend en outre un connecteur externe (41) disposé sur un côté de la première plaque latérale (11) orienté à l'opposé de la chambre, le connecteur externe (41) comprend un montant (42) faisant saillie vers l'extérieur et le premier adaptateur (31) comprend un premier trou traversant (310) correspondant au montant (42), et le montant (42) pénètre dans la première plaque latérale (11) et est raccordé au premier adaptateur (31) par le premier trou traversant (310).

4. Batterie selon la revendication 3, dans laquelle le premier trou traversant (310) du premier adaptateur (31) comprend une première section de trou et une deuxième section de trou qui sont raccordées l'une à l'autre, et la deuxième section de trou est située sur un côté de la première section de trou à proximité de la cellule (2) ; et
une extrémité du montant (42) à proximité de la cellule (2) s'étend vers l'extérieur pour former une partie d'extension (43) correspondant à la deuxième section de trou ; et/ou,
une surface d'extrémité du montant (42) à proximité de la cellule (2) est à fleur d'une surface latérale du premier adaptateur (31) à proximité de la cellule (2).

5. Batterie selon la revendication 3, dans laquelle une extrémité du montant (42) à proximité de la cellule (2) fait saillie du premier trou traversant (310) et s'étend vers l'extérieur le long d'une direction circonférentielle du premier trou traversant (310) pour former une partie d'extension (43) raccordée à une surface latérale du premier adaptateur (31) à proximité de la cellule (2).

6. Batterie selon la revendication 3, dans laquelle :
une première feuille isolante (6) est également disposée entre le connecteur externe (41) et la première plaque latérale (11), et une deuxième feuille isolante (7) est également disposée entre le premier adaptateur (31) et la première plaque latérale (11), et le montant (42) pénètre dans la première feuille isolante (6) et la deuxième feuille isolante (7) ; et/ou,
une première couche isolante (8) est disposée entre le montant (42) et la première plaque latérale (11) ; et/ou,
une deuxième couche isolante (82) est disposée entre le premier adaptateur (31) et la cellule (2).

7. Batterie selon la revendication 6, dans laquelle :
une saillie de la première feuille isolante (6) sur la première plaque latérale (11) recouvre une saillie du connecteur externe (41) sur la première plaque latérale (11) ; et/ou, une saillie de la deuxième feuille isolante (7) sur la première plaque latérale (11) recouvre une saillie du premier adaptateur (31) sur la première plaque latérale (11) ;
facultativement, la batterie comprend une pluralité de feuilles d'électrode agencées de manière stratifiée, la cellule (2) a une première face et une deuxième face qui sont disposées à l'opposé l'une de l'autre,
dans laquelle la deuxième couche isolante (82) s'étend jusqu'à la première face de la cellule (2) et est collée à la feuille d'électrode située sur la première face de la cellule (2), et/ou, la deuxième couche isolante (82) s'étend jusqu'à la deuxième face de la cellule (2) et est collée à la feuille d'électrode située sur la deuxième face de la cellule (2).

8. Batterie selon la revendication 1, dans laquelle le premier connecteur comprend en outre un composant de connexion raccordé respectivement à la première feuille de connexion (51) et à la quatrième feuille de connexion (54) ; le composant de connexion comprend une deuxième feuille de connexion (52) et une troisième feuille de connexion (53) ; la deuxième feuille de connexion (52) est située entre le premier adaptateur (31) et la cellule (2) ; la troisième feuille de connexion (53) est située entre la première languette (21) et le premier adaptateur (31) dans une direction allant du premier adaptateur (31) à la première languette (21) ; et la première feuille de connexion (51), la deuxième feuille de connexion (52), la troisième feuille de connexion (53) et la quatrième feuille de connexion (54) sont raccordées en séquence ;
facultativement, la première feuille de connexion (51) comprend une première partie de connexion (511) raccordée au premier adaptateur (31) et une deuxième partie de connexion (512) s'étendant dans une direction d'extension de la première plaque latérale (11), et la deuxième partie de connexion (512) est raccordée à la quatrième feuille de connexion (54) ;
facultativement, un côté de la première feuille de connexion (51) orienté à l'opposé du premier adaptateur (31) est en outre pourvu d'une sixième couche isolante (86) ; et/ou, un premier angle inclus est formé entre une surface du premier adaptateur (31) raccordée à la première feuille de connexion (51) et une surface de la quatrième feuille de connexion (54) raccordée à la première languette (21), et le premier angle inclus est dans une plage de 80° à 120° ; et/ou, la première feuille de connexion (51) est soudée au premier adaptateur (31) ; et/ou, la cellule (2) comprend une pluralité de feuilles d'électrode agencées de manière stratifiée, et une surface de la première feuille de connexion (51) raccordée au premier adaptateur (31) est parallèle à une surface de la feuille d'électrode.

9. Batterie selon la revendication 1, dans laquelle la batterie comprend en outre une troisième couche isolante (83) située entre le premier connecteur et la première plaque latérale (11).

10. Batterie selon la revendication 9, dans laquelle la troisième couche isolante (83) comprend une première partie située sur une surface de la quatrième feuille de connexion (54) orientée à l'opposé de la première languette (21).

11. Batterie selon la revendication 10, dans laquelle :
la cellule (2) comprend une pluralité de feuilles d'électrode agencées de manière stratifiée ;
la cellule (2) a une première face et une deuxième face disposées à l'opposé l'une de l'autre ;
la troisième couche isolante (83) comprend en outre une deuxième partie formée par extension depuis une extrémité de la première partie à proximité de la première face de la cellule (2) vers une direction à proximité de la cellule (2) et une troisième partie formée par extension depuis une extrémité de la première partie à proximité de la deuxième face de la cellule (2) vers la direction à proximité de la cellule (2).

12. Batterie selon la revendication 11, dans laquelle
une saillie de la première languette (21) dans une direction d'épaisseur de la cellule (2) est située à l'intérieur d'une saillie de la deuxième partie de la troisième couche isolante (83) dans la direction d'épaisseur de la cellule (2) ; et/ou, la saillie de la première languette (21) dans une direction d'épaisseur de la cellule (2) est située à l'intérieur d'une saillie de la troisième partie de la troisième couche isolante (83) dans la direction d'épaisseur de la cellule (2) ; et/ou, une saillie de la première languette (21) dans une direction de longueur de la cellule (2) est située à l'intérieur d'une saillie de la première partie de la troisième couche isolante (83) dans la direction de longueur de la cellule (2) ;
facultativement, la deuxième partie de la troisième couche isolante (83) s'étend jusqu'à la première face de la cellule (2) et est collée à la plaque d'électrode située sur la première face de la cellule (2) ; et/ou, la troisième partie de la troisième couche isolante (83) s'étend jusqu'à la deuxième face de la cellule (2) et est collée à la plaque d'électrode située sur la deuxième face de la cellule (2).

13. Batterie selon la revendication 1, dans laquelle :
la cellule (2) comprend une pluralité de feuilles d'électrode agencées de manière stratifiée, la plaque d'électrode comprend un premier collecteur de courant, et la première languette (21) est disposée sur le premier collecteur de courant ; et une distance entre le premier adaptateur (31) et le premier collecteur de courant est inférieure à 1 mm dans une direction allant du premier adaptateur (31) jusqu'à la cellule (2) ;
facultativement, la cellule (2) est en outre pourvue d'une deuxième languette (22), la deuxième languette (22) et la première languette (21) ayant des polarités opposées ; et la batterie comprend en outre un deuxième adaptateur (32) électriquement raccordé à la deuxième languette (22), et le deuxième adaptateur (32) est disposé entre la première plaque latérale (11) et la cellule (2), et une saillie du deuxième adaptateur (32) sur la première plaque latérale (11) ne chevauche pas sur une saillie de la deuxième languette (22) sur la première plaque latérale (11).

14. Batterie selon la revendication 13, dans laquelle le boîtier (1) comprend une deuxième plaque latérale (12) raccordée à la première plaque latérale (11), et une saillie de la première languette (21) sur la deuxième plaque latérale (12) chevauche au moins partiellement sur une saillie de la deuxième languette (22) sur la deuxième plaque latérale (12) ; et/ou,
une saillie du deuxième adaptateur (32) sur la deuxième plaque latérale (12) chevauche au moins partiellement sur la saillie de la deuxième languette (22) sur la deuxième plaque latérale (12) ; et/ou,
la première languette (21) et la deuxième languette (22) sont situées entre le premier adaptateur (31) et le deuxième adaptateur (32) ; et/ou,
le deuxième adaptateur (32) est soudé à la première plaque latérale (11) ; et/ou,
une distance entre un côté de la deuxième languette (22) orienté à l'opposé de la cellule (2) et un côté de la deuxième languette (22) raccordé à la cellule (2) n'est pas supérieure à une longueur du deuxième adaptateur (32) selon une direction allant de la première plaque latérale (11) à la deuxième languette (22) ; et/ou,
la longueur du deuxième adaptateur (32) est de 1 mm à 4 mm dans la direction allant de la première plaque latérale (11) à la deuxième languette (22) ; et/ou,
la longueur du deuxième adaptateur (32) est égale ou supérieure à une longueur du premier adaptateur (31) dans la direction allant de la première plaque latérale (11) à la deuxième languette (22).

15. Batterie selon la revendication 1, dans laquelle
le boîtier (1) comprend une cinquième plaque latérale (15) raccordée à la première plaque latérale (11), la cinquième plaque latérale (15) est pourvue d'une partie amincie (151), et une résistance mécanique de la partie amincie (151) est inférieure à une résistance mécanique d'autres parties du boîtier (1), excepté pour la partie amincie (151), et/ou
la cellule (2) comprend une pluralité de feuilles d'électrode agencées de manière stratifiée, une surface de la cinquième plaque latérale (15) est parallèle à une surface de la feuille d'électrode.
